# EUROPÄISCHE PATENTSCHRIFT

(11) **EP 3 669 285 B1**
(45) Veröffentlichungstag und Bekanntmachung des Hinweises auf die Patenterteilung: **08.09.2021**
(21) Anmeldenummer: 18723746.6
(22) Anmeldetag: 27.04.2018
(51) Int. Cl.: G06F 21/62

(54) **VERFAHREN UND STEUERSYSTEM ZUM STEUERN UND/ODER ÜBERWACHEN VON GERÄTEN**
METHOD AND SYSTEM FOR CONTROLLING AND/OR MONITORING OF DEVICES
PROCÉDÉ ET SYSTÈME DE COMMANDE ET/OU DE SURVEILLANCE DE DISPOSITIFS

(30) Priorität: 23.10.2017 EP 17197791; 23.10.2017 EP 18000033; 22.01.2018 EP 18152750; 16.03.2018 EP 18162189; 18.04.2018 WO PCT/EP2018/059891
(43) Veröffentlichungstag der Anmeldung: 24.06.2020
(73) Patentinhaber: Siemens Aktiengesellschaft, 80333 München (DE)
(72) Erfinder: JETZFELLNER, Thomas, 85609 Aschheim (DE)
(86) Internationale Anmeldenummer: PCT/EP2018/060900
(87) Internationale Veröffentlichungsnummer: WO 2019/081071

(56) Entgegenhaltungen:
- EP-A1- 2 372 594
- US-A1- 2012 173 884
- US-A1- 2014 046 906
- US-A1- 2014 280 874
- CHRISTIDIS KONSTANTINOS ET AL: "Blockchains and Smart Contracts for the Internet of Things", IEEE ACCESS, Bd. 4, 3. Juni 2016 (2016-06-03), Seiten 2292-2303, XP011613134, DOI: 10.1109/ACCESS.2016.2566339
- William Mougayar ET AL: "Implementing Blockchain Technology" In: "The Business Blockchain: Promise, Practice, and Application of the Next Internet Technology", 24. Januar 2017 (2017-01-24), Audible Studios on Brilliance Audio, XP055471056, ISBN: 978-1-5366-6346-4 Seiten 1-16, Seite 13, Absatz 3

## Beschreibung

Die Erfindung bezieht sich auf ein Verfahren und Steuersystem zum Steuern und/oder Überwachen von Geräten.

Geräte, wie Feldgeräte und Fertigungsgeräte, werden immer stärker vernetzt und können beispielsweise von unterschiedlichen Betreibern bereitgestellt/betrieben werden. Diesen Geräten werden oft Befehlsfolgen übermittelt, die durch die Geräte ausgeführt werden können. Nachteilig ist dabei, dass eine Abarbeitung der Befehlsfolgen in einem heterogenen Netz aus Geräten von unterschiedlichen Betreibern schwer zu steuern ist.

Aus dem Stand der Technik ist das Dokument DE102011018878 bekannt. Dieses betrifft ein Verfahren zum Synchronisieren der Datenbestände von Datenbanken in einem verteilten Datenbanksystem, wobei sich Datenbanken auf mobilen Netzwerkknoten und auf festen Netzwerkknoten befinden, die zumindest teilweise über nicht ständig verfügbare Netzwerkverbindungen miteinander verbunden sind. Das Dokument EP 2 372 598 A1 offenbart auch ein Verfahren zum Synchronisieren von Datenbanken mit einer hohen Anzahl von Datenbanken in einem Datenbanksystem.

Eine Aufgabe der vorliegenden Erfindung ist es, eine Alternative zu bekannten Lösungen aus dem Stand der Technik zu finden.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Technologie von Blockketten (engl. Blockchains) bzw. "Distributed Ledgers" ist aktuell eine intensiv diskutierte Technologie, die insbesondere als verteiltes Datenbanksystem realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Gemäß einem ersten Aspekt betrifft die Erfindung ein Steuersystem zum Steuern und/oder Überwachen von Geräten, umfassend:
- ein erstes Bestimmungsmodul zum Bestimmen von Ausführungsanforderungen für eine Ausführung von Steuerbefehlen durch die Geräte, wobei
   - in den Ausführungsanforderungen gerätespezifischen Anforderungen und/oder vorausgesetzte Steuerbefehle gespeichert sind;
- ein verteiltes Datenbanksystem aufweisend,
   - eine Vielzahl von Knoten, wobei die Knoten und die Geräte über ein erstes Kommunikationsnetzwerk miteinander verbunden sind;
- ein erstes Zuordnungsmodul zum Zuordnen der jeweiligen Ausführungsanforderungen zu den Steuerbefehlen;
- ein erstes Speichermodul zum Speichern der jeweiligen Steuerbefehle mit den zugeordneten Ausführungsanforderungen in Steuertransaktionen, wobei
   - die Steuertransaktionen in Datenblöcken des verteilten Datenbanksystems gespeichert werden;
   - die Steuertransaktionen mittels der Datenblöcke an die Geräte übermittelt werden;
- ein erstes Überprüfungsmodul zum Überprüfen der jeweiligen Ausführungsanforderungen zum Ausführen der Steuerbefehle einer der Steuertransaktionen durch ein entsprechendes Gerät, wobei
   - die gerätespezifischen Anforderungen für das entsprechende Gerät überprüft werden; und/oder
   - überprüft wird, ob Bestätigungstransaktionen für die vorausgesetzten Steuerbefehle in Datenblöcken des verteilten Datenbanksystems verfügbar sind;
- ein Ausführungsmodul zum Ausführen der Steuerbefehle durch das entsprechende Gerät abhängig von einem Ergebnis des Überprüfens;
- ein zweites Speichermodul zum Speichern des Ergebnisses des Ausführens der Steuerbefehle in Bestätigungstransaktionen der Datenblöcke des verteilten Datenbanksystems.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter "Bereitstellen" kann im Zusammenhang mit der Erfindung beispielsweise ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem bzw. deren Infrastruktur verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems den vorhergehenden Datenblock des verteilten Datenbanksystems angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen beziehen. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transkation eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transkation noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in der entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems verweisen bzw. diese referenzieren [1] [4] [5] .

Unter "Einfügen in das verteilte Datenbanksystem" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transkationen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden.

Eine Transaktion kann insbesondere einen Programmcode umfassen, der beispielsweise einen Smart Contract realisiert. Beispielsweise können im Zusammenhang mit der Erfindung unter Transaktion auch eine Steuertransaktionen und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.).

Unter "Steuerbefehle" oder "Steuertransaktionen" können im Zusammenhang mit der Erfindung beispielsweise ein Smart-Contract [4][5] oder ausführbarer Programmcode verstanden werden, der insbesondere durch das verteilte Datenbanksystem ausgeführt wird, wobei beispielsweise das verteilte Datenbanksystem bzw. dessen Knoten und Infrastruktur die entsprechenden Steuerbefehle abarbeitet bzw. umsetzt. Insbesondere ergeben mehrere Steuerbefehle oder Steuertransaktionen aus einem oder mehreren Datenblöcken eine Befehlsfolge, die insbesondere eine Fertigungsanlage mit den zugehörigen Fertigungsmaschinen steuern, die Geräte eines Automatisierungsnetzes steuern oder die Geräte eines Energieversorgungsnetzes steuern oder Geräte im Internet der Dinge steuern. Insbesondere sind in den Steuerbefehlen oder Steuertransaktionen (also auch in den Befehlsfolgen) die Fertigungsanweisungen oder Fertigungsschritte für ein Produkt kodiert. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage und/oder Geräte im Internet der Dinge, die insbesondere auch ein Knoten des verteilten Datenbanksystems sind. Dabei können die Geräte beispielsweise Feldgeräte sein, die insbesondere auch ein Knoten des verteilten Datenbanksystems sind. Die Geräte können beispielsweise auch Bankautomaten sein, wobei die Steuerbefehle eine Geldauszahlung veranlassen. Beispielsweise können die Steuerbefehle aus einer Befehlsfolge abgeleitet werden bzw. aus diesen bestimmt werden. Beispielsweise kann eine Steuertransaktion einen oder mehrere Steuerbefehle umfassen.

Unter Steuerbefehlen können beispielsweise Befehlsfolgen oder auch Transaktionen aus einer Datenbank bzw. eines Datenbanksystems verstanden werden, die durch Geräte oder Knoten des verteilten Datenbanksystems ausgeführt werden sollen. Bei dem Datenbanksystem kann es sich beispielsweise um das verteilte Datenbanksystem handeln, wenn es z. B. Transaktionen gibt, denen noch keine Ausführungsanforderungen zugewiesen bzw. zugeordnet wurden. Alternativ oder zusätzlich kann das Datenbanksystem eine andere Datenbank sein, z. B. eine konventionelle hierarchische Datenbank, von der die entsprechenden Transaktionen abgerufen werden können. Unter Steuerbefehle können beispielsweise auch Befehlsfolgen oder auch Transaktionen verstanden werden, die durch ein Eingabesystem bereitgestellt werden und die von dem verteilten Datenbanksystem ausgeführt werden sollen.

Unter "gerätespezifischen Anforderungen" können im Zusammenhang mit der Erfindung beispielsweise ein bestimmtes Gerät, das z. B. durch einen eindeutigen Identifizierer festgelegt ist, Geräte die vorgegebene Steuerungsaktionen durchführen können (z. B. ein Fertigungsroboter, der Metallteile verschweißen kann; ein Lackierroboter, der vorgegebene Farben auf ein Fertigungsteil auftragen kann; Geräte, die in einem Umspannwerk elektrische Verbindungen automatisiert herstellen) oder Geräte sein, die Fertigungsschritte bzw. Steuerbefehle mit einer vorgegebenen Präzision und/oder Geschwindigkeit ausführen (z. B. Drehbänke, Fräsen und Schneidemaschinen). Alternativ oder zusätzlich können "gerätespezifischen Anforderungen" auch bestimmte Geräteklassen voraussetzen, die für eine Ausführung oder Abarbeitung der Steuerbefehle vorgegeben werden. Insbesondere wird dabei unter einer Geräteklasse ein oder mehrere Geräte (z. B. Schleifgeräte oder Sägegeräte) verstanden, die beispielsweise in der Lage sind bestimmte vorgegebene Aktionen auszuführen (z. B. ein bestimmtes Material schleifen oder sägen).

Die gerätespezifischen Anforderungen können beispielsweise auch Sicherheitsanforderungen oder ortsbezogene Anforderungen (z. B. eine Länderangabe, eine GPS-Angabe oder Postleitzahl (PLZ)) sein, die ein Gerät für die Ausführung der Steuerbefehle erfüllen soll. Beispielsweise kann gefordert sein, dass das Gerät vorgegebene Sicherheitseinrichtungen aufweisen soll oder für die Ausführung der Steuerbefehle am Gerät noch eine bestimmte/vorgegebene Authentisierung und/oder Authentifizierung notwendig ist. Dies kann beispielsweise der Fall sein, wenn jemand an einem Gerät (z. B. einem Geldautomaten) sich Bargeld auszahlen lassen möchte. Die Steuerbefehle sind dann beispielsweise die Anforderung des Kunden eine Geldauszahlung vorzunehmen. Hat beispielsweise ein entsprechender Kunde konfiguriert, dass er z. B. nur in vorgegebenen Ländern, z. B. Italien, Frankreich und Österreich, eine Bargeldauszahlung erlaubt, so wird dies in den gerätespezifischen Anforderungen (und insbesondere ggf. implizit in den Ausführungsanforderungen ebenfalls) gespeichert. Ein Geldautomat in Andorra würde dann ggf. keine Auszahlung erlauben bzw. diese unterbinden. Alternativ kann dies z. B. auch durch einen anderen Knoten des verteilten Datenbanksystems unterbunden werden oder durch einen Smart-Contract des verteilten Datenbanksystems unterbunden werden. Auch kann beispielsweise durch die Sicherheitsanforderungen eine spezifische Authentifizierung des Kunden gefordert sein. Beispielsweise, dass ein Pin für ein Auszahlung eingegeben wird (was z. B. in den USA nicht zwangsläufig der Fall ist) und/oder eine bestimmte Pin-Länge gefordert ist (z. B. 8 Zeichen) und/oder, dass andere zusätzliche Authentisierungsverfahren gefordert sind (z. B. 2 Faktor-Authentisierung, Mobile-Tan, Google Authenticator)

Alternativ kann das Bestimmungsmodul die Steuerbefehle auch weiter analysieren und, wenn beispielsweise das Bestimmungsmodul bereits feststellt, dass die gerätespezifischen Anforderungen nicht erfüllt sind oder nicht erfüllbar sind, eine Steuertransaktion erstellen, die das entsprechende Gerät oder das System darauf hinweist und ggf. eine Ausführung der Steuerbefehle unterbindet. Alternativ kann beispielsweise auch keine Steuertransaktion erzeugt werden und es gibt irgendwann einen Timeout für die Ausführung der Steuerbefehle, z. B. nach einem vorgegebenen Zeitraum, der vorzugsweise konfigurierbar ist.

Unter "vorausgesetzte Steuerbefehle" können im Zusammenhang mit der Erfindung beispielsweise Steuerbefehle verstanden werden, die insbesondere durch andere Knoten (des verteilten Datenbanksystems) und/oder durch eines oder mehrere der Geräte bereits ausgeführt sein müssen, bevor die entsprechenden Steuerbefehle ausgeführt werden können. Insbesondere sind für diese vorausgeführten Steuerbefehle entsprechende Bestätigungstransaktionen in dem verteilten Datenbanksystem gespeichert (z. B. in Datenblöcken des verteilten Datenbanksystems). Insbesondere werden bei diesen vorausgeführten oder vorausgesetzten Steuerbefehlen auch die diesen vorausgeführten Steuerbefehlen zugeordneten gerätespezifischen Anforderungen mit überprüft bzw. mit berücksichtigt. Mittels der Ausführungsanforderungen wird insbesondere sichergestellt, dass beispielsweise eine Reihenfolge der Fertigungsschritte beim Erstellen eines Produktes eingehalten wird. Es wird damit beispielsweise erreicht, dass die Fertigungsreihenfolge in sinnvoller Weise eingehalten wird. Es wird z. B. verhindert, dass ein Fertigungsschritt durch einen anderen zerstört wird, nur weil die Fertigungsreihenfolge nicht eingehalten wurde. Auf ähnliche Weise kann insbesondere auch eine Steuerung von einem Energieversorgungsnetz gesteuert werden, indem z. B. Transformationen oder Spannungskoppler in der richtigen Reihenfolge eingeschaltet oder mit dem Energieversorgungsnetz verbunden werden. Werden beispielsweise für das Ausführen von Steuerbefehlen bzw. Steuertransaktionen keine vorausgesetzten Steuerbefehle benötigt, können die vorausgesetzten Steuerbefehle leer sein. Beispielsweise können diese mit einer Null belegt sein, einem Leerstring belegt sein oder einem Wert der angibt, dass keine vorausgesetzten Steuerbefehle notwendig sind. Alternativ kann beispielsweise einem Teil der Steuerbefehle keine Ausführungsanforderung zugeordnet sein, wobei insbesondere zumindest einem der Steuerbefehle zumindest eine Ausführungsanforderung zugeordnet ist.

Insbesondere ist unter "Speichern von Transaktionen in Datenblöcken" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems) oder die entsprechende Transaktion des verteilten Datenbanksystems) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem" erläutert ist.

Unter einem "Programmcode" (z. B. ein Smart-Contract) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Dies kann beispielsweise mittels einer Ausführungsumgebung (z. B. eine virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems ausgeführt [4][5]. Dabei wird beispielsweise eine virtuelle Maschine durch die Infrastruktur des verteilten Datenbanksystems realisiert.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems (z. B. eine Blockkette) gespeichert, beispielsweise in einem Datenblock des verteilten Datenbanksystems. Beispielsweise kann der Smart Contract auf die gleiche Weise ausgeführt werden, wie dies bei der Definition von "Programmcode", insbesondere im Zusammenhang mit der Erfindung, erläutert ist.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten können bzw. von diesem akzeptiert zu werden.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blocckette oder eine Peer to Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Block-header), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems" kann im Zusammenhang mit der Erfindung beispielsweise der Datenblock des verteilten Datenbanksystems verstanden werden, der insbesondere einem (bestimmten) Datenblock direkt vorhergeht. Alternativ können unter "vorhergehender Datenblöcke eines (bestimmten) Datenblockes des verteilten Datenbanksystems" insbesondere auch alle Datenblöcke des verteilten Datenbanksystems verstanden werden, die dem bestimmten Datenblock vorhergehen. Hierdurch kann beispielsweise die Verkettungsprüfsumme oder die Transaktionsprüfsumme insbesondere nur über das dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems" und dergleichen, können im Zusammenhang mit der Erfindung beispielsweise Geräte (z. B. Feldgeräte), Rechner, Smart-Phones, Clients oder Teilnehmer verstanden werden, die Operationen (mit) dem verteilten Datenbanksystem (z. B. eine Blockkette) durchführen [1][4][5]. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems sind. Dabei können die Geräte beispielsweise Feldgeräte sein oder Geräte im Internet der Dinge sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Bloccketten-Orakel löscht umfasst). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einem "Rechner" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer des verteilten Datenbanksystems (z. B. der Blockkette) sind (also keine Operationen mit dem verteilten Datenbanksystem durchführen oder diese nur abfragen, ohne jedoch Transaktionen durchzuführen, Datenblöcke einfügen oder Proof-of-Work-Nachweise berechnen), verstanden werden. Alternativ kann insbesondere auch unter einem Rechner ein Knoten des verteilten Datenbanksystems verstanden werden. Mit anderen Worten kann insbesondere unter einem Gerät ein Knoten des verteilten Datenbanksystems verstanden werden oder auch ein Gerät außerhalb der Blockkette bzw. des verteilten Datenbanksystems verstanden werden. Ein Gerät außerhalb des verteilten Datenbanksystems kann beispielsweise auf die Daten (z. B. Transaktionen oder Steuertransaktionen) des verteilten Datenbanksystems zugreift und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems) durch einen Knoten realisiert, kann dies z. B. mittels eines Smart-Contracts erfolgen, der insbesondere in einer Transaktion des verteilten Datenbanksystems gespeichert ist.

Unter "digitalen Zwilling" (engl. Digital Twin) kann im Zusammenhang mit der Erfindung beispielsweise ein digitales Abbild, insbesondere in Form eines Datenmodells oder einer Datenstruktur, eines realen Produkts, (technischen) Gegenstandes oder eines (physikalischen) Objektes verstanden werden. Dies sind z. B. (elektrische /elektromechanische /elektronische) Geräte, Windturbine, oder Großanlagen wie Offshore-Plattformen. Insbesondere ist der Begriff digitaler Zwilling auch in den folgenden Patentanmeldungen erläutert: WO2016/141998 oder PCT/EP2016/064785. Insbesondere kann ein digitaler Zwilling anhand von Daten des Gegenstandes der abgebildet wird, aktualisiert werden. Diese entsprechenden Daten können beispielsweise durch Sensoren erfasst werden und dann den digitalen Zwilling aktualisieren. Dies kann beispielsweise in Echtzeit, periodisch, manuell gesteuert oder zu vorgegebenen Zeitpunkten erfolgen. Unter einem primären digitalen Zwilling kann beispielsweise eine sehr detaillierte digitale Abbildung eines Gegenstandes verstanden werden, die insbesondere eine große Datenmenge umfasst und beispielsweise hunderte oder tausende Datensätze umfasst. Insbesondere kann ein digitaler Zwilling ein Steuermodul (z. B. Steuersoftware) oder Steuersystem (z. B. ein Überwachungssystem des Gegenstandes, das durch den digitalen Zwilling abgebildet wird) umfassen, sodass beispielsweise der digitale Zwilling Steueraktionen (z. B. kann der primäre digitale Zwilling Transaktionen mit aktualisierten Daten in die Blockkette einfügen oder seine Datenintegrität anhand der Blockkette selbständig prüfen) durchführen kann. Insbesondere können der primäre digitale Zwilling oder ein ausgewählter (oder sekundärer) digitaler Zwilling, der einen ausgewählten Teil der Daten des primären digitalen Zwillings umfasst, z. B. mittels der Erfindung (z. B. dem Steuersystem und/oder dem verteilten Datenbanksystem und/oder dem ersten verteiltes Datenbanksystem) realisiert werden. Dabei ist beispielsweise ein digitaler Zwilling (z. B. der primäre digitale Zwilling und/oder der sekundäre digitale Zwilling) ein erfindungsgemäßes Steuersystem und/oder ein erfindungsgemäßes verteiltes Datenbanksystem und/oder ein erfindungsgemäßes erstes verteiltes Datenbanksystem bzw. ein digitaler Zwilling ist z. B. als einer dieser erfindungsgemäßen Gegenstände (oder eine Kombination von diesen) ausgebildet.

Die Offenlegungsschrift EP 2 372 594 A1 offenbart ein System zur Zugangssicherung durch Validierungsfunktionen von Transaktionen. Das System umfasst mehrere Knoten, die über ein Kommunikationssystem Daten in die Datenbank einspeisen können. Die Daten können sowohl Dateninhalte/Payloads als auch Programme/ Transaktionen umfassen. Die Daten der Transaktionen können in verschiedene Datenblöcke gespeichert werden. Die Transaktionen werden durch vorbestimmte, individuelle Validierungsfunktionen für Gültig erklärt.

Mit der Erfindung ist es insbesondere möglich eine dezentrale Infrastruktur zur Ausführung von Steuerbefehlen zu realisieren. Insbesondere lässt sich dadurch eine Steuerung der Geräte im Internet der Dinge dezentral durchführen, selbst wenn sich einzelne Betreiber von Geräten und/oder Gerätegruppen der Geräte nicht vertrauen. Insbesondere können dabei die Geräte als Knoten des verteilten Datenbanksystems ausgebildet sein und es kann beispielsweise zum Ausführen oder Abarbeiten der Steuerbefehle dynamisch durch das verteilte Datenbanksystem bzw. ein entsprechender Knoten oder ein entsprechendes Gerät gefunden werden, das die geforderten Ausführungsanforderungen zum Ausführen der Steuerbefehle erfüllt. Ein unrechtmäßiges Bevorzugen eines Knotens (z. B. durch Betrug/Bestechung) kann deutlich erschwert werden, wenn beispielsweise eine blockkettenbasierte Implementierung des verteilten Datenbanksystems genutzt wird, da ein Vertrauensschutz bzw. ein Manipulationsschutz analog zu Bitcoin bei den Steuertransaktionen bzw. Bestätigungstransaktionen realisiert wird. Insbesondere kann auf eine zentrale Instanz, die eine Authentisierung der Knoten vornimmt, verzichtet werden. Wird beispielsweise eine Realisierung des Datenbanksystems mittels einer Blockkette, die insbesondere eine kryptographische Währung wie Bitcoin implementiert, so kann beispielsweise auf einfache und effiziente Weise eine Abrechnung für eine Abarbeitung der Steuerbefehle einem Auftraggeber, der die Steuerbefehle eingestellt hat bzw. der eine Befehlsfolge (aus denen z. B. die Steuerbefehle hergeleitet sind) bereitgestellt hat, abgerechnet werden.

Zusätzlich kann beispielsweise die Sicherheit beim Betreiben des verteilten Datenbanksystems (z. B. einer Blockkette) erhöht werden, da insbesondere für die Ausführung der Steuerbefehle eine zusätzliche Prüfung eingeführt wurde. Mit anderen Worten werden insbesondere ungeprüfte Transaktionen bzw. Steuerbefehle in geprüfte Transaktionen konvertiert, wobei die Prüfung beispielsweise anhand von Knoten- oder Geräteeigenschaften von Geräten oder Knoten (z. B. den gerätespezifischen Daten) erfolgt, welche die Steuerbefehle ausführen sollen.

Es ist beispielsweise auch denkbar, dass mittels des Verfahrens die Auszahlung von Bargeld an Geldautomaten verbessert bzw. sicherer gemacht wird, wenn der Geldautomat beispielsweise ein Knoten des verteilten Datenbanksystems ist oder über einen Knoten des verteilten Datenbanksystems oder eine andere Schnittstelle auf die entsprechenden Steuertransaktionen des verteilten Datenbanksystems zugreift oder diese abruft.

Alternativ oder zusätzlich können die Ausführungsanforderungen beispielsweise auch noch weitere für die Ausführung zu berücksichtigende Vorgaben umfassen. Dies kann beispielsweise eine Vorgabe sein, dass eine bestimmte Gebühr entrichtet sein muss, damit ein Steuerbefehl von einem entsprechenden Knoten oder Gerät abgearbeitet werden kann. Dies kann beispielsweise in den gerätespezifischen Anforderungen gespeichert werden, indem das Gerät für seine Nutzung bzw. für die Abarbeitung von Steuerbefehlen eine Entrichtung einer vorgegeben Gebühr voraussetzt. Die Entrichtung der vorgegeben Gebühr kann beispielsweise mittels kryptographischer Währungen erfolgen, die vorzugsweise ebenfalls in Transaktionen des verteilten Datenbanksystems dokumentiert bzw. gespeichert werden. Ob diese Vorgaben erfüllt sind (z. B. Gebührenentrichtung) kann z. B. ebenfalls durch das Bestimmungsmodul überprüft werden, indem z. B. überprüft wird, ob Transaktionen für eine entsprechende Entrichtung der Gebühren im verteilten Datenbanksystem verfügbar sind. Alternativ kann beispielsweise auch ein Kontostand bei einer Bank überprüft werden, ob eine entsprechende Gebührenentrichtung durchgeführt wurde. Sind diese Vorgaben der Ausführungsanforderungen z. B. für entsprechende Steuerbefehle erfüllt, können diese weiterverarbeitet werden und wie bereits erläutert in Steuertransaktionen gespeichert werden.

Gemäß einem Aspekt betrifft die Erfindung ein erstes verteiltes Datenbanksystem zum Speichern von Datenblöcken aufweisend:
- eine Vielzahl von Knoten, die über ein zweites Kommunikationsnetzwerk miteinander verbunden sind;
- ein drittes Speichermodul zum Speichern von Transaktionen in Datenblöcken des verteilten Datenbanksystems;
- ein viertes Speichermodul zum Zuordnen eines Aufgabendatensatzes einer spezifischen Aufgabe zu dem verteilten Datenbanksystem, wobei
   - insbesondere die Transaktionen Daten zum Durchführen der spezifischen Aufgabe umfassen;
- ein zweites Zuordnungsmodul zum Zuordnen eines Gültigkeitsdatensatzes für das verteilte Datenbanksystem, wobei
   - insbesondere der Gültigkeitsdatensatz eine Gültigkeit für vorgegebene Funktionen des verteilten Datenbanksystems angibt.

Das erste verteilte Datenbanksystem ist dahingehend vorteilhaft, um insbesondere bei einem verteilten Datenbanksystem, das beispielsweise als Blockkette realisiert ist, für eine spezifische Situation insbesondere nur einen Aufgabe eine vorgegebene Gültigkeit zu erlauben, wobei die Gültigkeit beispielsweise durch den Lebenszyklus (z. B. die Nutzungsdauer) eines Gerätes definiert ist. Dies ist vorteilhaft, um beispielsweise ein großes (insbesondere im Sinne der notwendigen Speicherkapazität bzw. Datenmenge) verteiltes Datenbanksystem zu vermeiden und stattdessen insbesondere mehrere kleinere verteilte Datenbanksysteme zu realisieren, die insbesondere einem spezifischen Gerät, einem technischen System (mit mehreren Geräten) oder einem technischen Subsystem (mit mehreren Geräten) zugeordnet sind. Ein Problem beispielsweise eines großen verteilten Datenbanksystems, das beispielsweise als Blockkette realisiert ist, ist, dass Datenblöcke aus diesem verteilten Datenbanksystem nicht mehr gelöscht werden können (ist eine Eigenschaft von Blockketten). Dies hat insbesondere zur Folge, dass große Datenmengen in der Blockkette gespeichert sind, die beispielsweise nicht mehr benötigt werden. Dies ist insbesondere für eine Nutzung solcher Architekturen im Internet der Dinge nachteilig, da beispielsweise sehr viel Energie und Speicherplatz verschwendet wird.

Beispielsweise kann ein Beginn der Gültigkeit bzw. der Lebenszyklus des ersten verteilten Datenbanksystems durch einen ersten Trigger zur Erzeugung des ersten verteilten Datenbanksystems realisiert werden und die Gültigkeit bzw. der Lebenszyklus wird durch einen zweiten Trigger beendet, wenn z. B. der letzte Befehl einer Befehlsfolge abgearbeitet wurde oder das Gerät/technische System/technische Subsystem ausgewechselt wurde. Ein Trigger kann beispielsweise ein Steuersignal, ein Interrupt oder durch einen Softwareschalter sein. Der erste Trigger kann beispielsweise dadurch realisiert werden, dass das Gerät/technische System/technische Subsystem erstmalig installiert oder eingeschaltet wird oder der Startbefehl einer Befehlsfolge zum Steuern eine Kraftwerksanlage ausgeführt wird. Ist beispielsweise die Gültigkeit an die Abarbeitung einer Befehlsfolge (diese Abarbeitung kann z. B. Wochen oder Monate dauern) durch eine Vielzahl von Geräten in einem Energieversorgungsnetz gerichtet oder gebunden, so kann die Gültigkeit bzw. der Lebenszyklus enden, wenn alle Geräte ihre Befehle abgearbeitet haben.

Bei weiteren Ausführungsformen des ersten verteilten Datenbanksystems umfasst das erste verteilte Datenbanksystem ein Aktivitätsmodul, wobei das Aktivitätsmodul dazu eingerichtet ist, die Aktivität des ersten verteilten Datenbanksystems anzuzeigen und/oder zu dokumentieren.

Das erste verteilte Datenbanksystem ist dahingehend vorteilhaft, um insbesondere die Aktivität beispielsweise durch eine ein Heartbeat Signal oder ein Steuersignal im Betrieb durch einen Administrator überprüfbar zu machen. Hierdurch kann beispielsweise angegeben werden, wie viele Knoten des ersten verteilten Datenbanksystem gerade aktiv sind und/oder deren Speicherauslastung und/oder deren Prozessorauslastung aufgezeichnet werden. Alternativ kann das Aktivitätsmodul beispielsweise diese Informationen in eine Datei schreiben, um beispielsweise Systemzustände oder Neustarts von Knoten des ersten verteilten Datenbanksystems zu dokumentieren.

Bei weiteren Ausführungsformen des ersten verteilten Datenbanksystems umfasst das erste verteilte Datenbanksystem eine administrative Schnittstelle.

Das erste verteilte Datenbanksystem ist dahingehend vorteilhaft, um insbesondere eine Konfiguration des ersten verteilten Datenbanksystems zu ermöglichen. Über die administrative Schnittstelle können beispielsweise Knoten neu gestartet werden und/oder Knoten und/oder Blockketten-Orakel [8] dem ersten verteilten Datenbanksystem hinzugefügt werden.

Bei weiteren Ausführungsformen des ersten verteilten Datenbanksystems umfasst das erste verteilte Datenbanksystem eine Ausgabeschnittstelle.

Das erste verteilte Datenbanksystem ist dahingehend vorteilhaft, um insbesondere über die Ausgabeschnittstelle Statusmeldungen abrufen zu können (z. B. die Ausgabeschnittstelle ist zum Abrufen der Statusmeldungen und/oder Statusdaten ausgebildet). Dies kann beispielsweise durch das Aktivitätsmodul verwendet werden. Die Ausgabeschnittstelle kann beispielsweise einen Gesamtsystemstatus und/oder einen Teilsystemstatus bereitstellen, der z. B. angibt wie viele Knoten des ersten verteilten Datenbanksystems zu einem bestimmten Zeitpunkt (z. B. um 12:50 Uhr) aktiv waren und/oder wie viele Knoten des ersten verteilten Datenbanksystems offline oder inaktiv waren. Es ist beispielsweise auch denkbar, dass andere Systeminformationen bereitgestellt werden, wie z. B. der Speicherverbrauch und/oder das Speichervolumen des ersten verteilten Datenbanksystems und/oder einzelner Knoten. Alternativ oder zusätzlich kann z. B. eine Prozessorauslastung und/oder Speicherauslastung des ersten verteilten Datenbanksystems und/oder einzelner Knoten über die Ausgabeschnittstelle bereitgestellt werden.

Bei weiteren Ausführungsformen des ersten verteilten Datenbanksystems ist der Gültigkeitsdatensatz durch den Aufgabendatensatz der spezifischen Aufgabe festgelegt.

Das erste verteilte Datenbanksystem ist dahingehend vorteilhaft, um insbesondere ein erstes verteiltes Datenbanksystem zu erzeugen, das vorzugsweise nur für die spezifische Aufgabe (z. B. Abarbeiten einer Befehlsfolge für die Fertigung eines Produktes durch mehrere Geräte) gültig ist. Dies ist beispielsweise bei der Fertigung von komplexen Produkten vorteilhaft, da hierdurch auf einfache Weise ein integritätsgeschützter Datenspeicher bzw. eine integritätsgeschützte Datenbank bereitgestellt werden kann. Dies ist insbesondere vorteilhaft, wenn das erste verteilte Datenbanksystem z. B. bei einer Abarbeitung von Befehlsfolgen oder Steuerbefehlen, wie dies bei dem erfindungsgemäßen Steuersystem erläutert wurde, eingesetzt wird. In einem solchen Anwendungsszenario kann ein erstes verteiltes Datenbanksystem z. B. für alle Geräte verwendet werden, die bei der Abarbeitung der Steuerbefehle einer Befehlsfolge beteiligt sind. Alternativ können auch mehrere erste verteilte Datenbanksysteme für Gruppen oder Klassen von Geräten verwendet werden, die bei dem Steuersystem gesteuert und/oder überwacht werden. Die Gültigkeit und/oder die spezifische Aufgabe des ersten verteilten Datenbanksystems ist beispielsweise durch den Beginn und dem Ende der Abarbeitung der Befehlsfolge definiert. Es ist beispielsweis auch möglich, dass die Gültigkeit und/oder die spezifische Aufgabe des ersten verteilten Datenbanksystems durch eine Nutzungsdauer eines oder mehrerer Geräte definiert sind. Bei weiteren Ausführungsformen des ersten verteilten Datenbanksystems umfasst das erste verteilte Datenbanksystem ein zweites Überprüfungsmodul, das die Gültigkeit für vorgegebene Funktionen überprüft.

Das erste verteilte Datenbanksystem ist dahingehend vorteilhaft, um insbesondere eine Überprüfung der Gültigkeit durch das verteilte Datenbanksystem selbst durchzuführen, ohne dass dafür beispielsweise eine zentrale Instanz erforderlich ist.

Bei weiteren Ausführungsformen des ersten verteilten Datenbanksystems umfassen die Transaktionen Steuerbefehle und/oder Befehlsfolgen und/oder gerätespezifische Daten über ein Gerät oder ein Feldgerät.

Das erste verteilte Datenbanksystem ist dahingehend vorteilhaft, um insbesondere ein erfinderisches Steuersystem mittels des ersten verteilten Datenbanksystems zu realisieren.

Gemäß einem weiteren Aspekt betrifft die Erfindung ein Verfahren zum rechnergestützten Bereitstellen von Transaktionen mit folgenden Verfahrensschritten:
- Speichern von Daten in Transaktionen, wobei die Transaktionen in Datenblöcken eines ersten verteilten Datenbanksystems gespeichert sind;
- Zuordnen eines Aufgabendatensatzes einer spezifischen Aufgabe zu dem ersten verteilten Datenbanksystem, wobei
   - insbesondere die Transaktionen Daten zum Durchführen der spezifischen Aufgabe umfassen;
- Zuordnen eines Gültigkeitsdatensatzes für das verteilte Datenbanksystem, wobei
   - insbesondere der Gültigkeitsdatensatz eine Gültigkeit für vorgegebene Funktionen des verteilten Datenbanksystems angibt.

Bei weiteren Ausführungsformen des Verfahrens umfasst das Verfahren weitere Verfahrensschritte um die funktionalen Merkmale des ersten verteilten Datenbanksystems zu realisieren.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass das genannte erfindungsgemäße verteilte Datenbanksystem und/oder das erste verteilte Datenbanksystem und/oder das Steuersystem und/oder das Gerät erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße verteilte Datenbanksystem und/oder das erste verteilte Datenbanksystem und/oder das Steuersystem und/oder das Gerät erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;
- Fig. 4: ein weiteres Ausführungsbeispiel der Erfindung;
- Fig. 5: ein weiteres Ausführungsbeispiel der Erfindung;
- Fig. 6: ein weiteres Ausführungsbeispiel der Erfindung;
- Fig. 7: ein weiteres Ausführungsbeispiel der Erfindung;
- Fig. 8: ein weiteres Ausführungsbeispiel der Erfindung; und
- Fig. 9: ein weiteres Ausführungsbeispiel der Erfindung.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

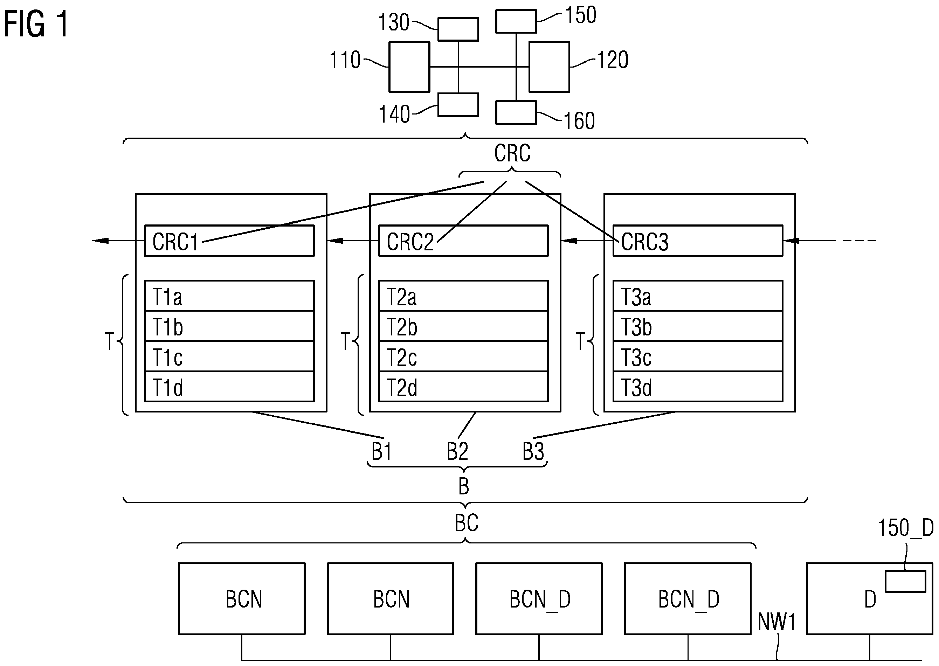

Die Fig. 1 zeigt ein erstes Ausführungsbeispiel der Erfindung. Fig. 1 zeigt dabei ein Steuersystem zum Steuern und/oder Überwachen von Geräten, wobei das verteilte Datenbanksystem beispielsweise mittels einer Blockkette BC realisiert wird.

Das Ausführungsbeispiel für ein Steuersystem zum Steuern und/oder Überwachen von Geräten kann in einer Variante folgende Merkmale umfassen:
- ein erstes Bestimmungsmodul zum Bestimmen von Ausführungsanforderungen für eine Ausführung von Steuerbefehlen durch die Geräte, wobei
   - in den Ausführungsanforderungen gerätespezifischen Anforderungen und/oder vorausgesetzte Steuerbefehle gespeichert sind;
- ein verteiltes Datenbanksystem aufweisend,
   - eine Vielzahl von Knoten, wobei die Knoten und die Geräte über ein erstes Kommunikationsnetzwerk miteinander verbunden sind;
- ein erstes Zuordnungsmodul zum Zuordnen der jeweiligen Ausführungsanforderungen zu den Steuerbefehlen;
- ein erstes Speichermodul zum Speichern der jeweiligen Steuerbefehle mit den zugeordneten Ausführungsanforderungen in Steuertransaktionen, wobei
   - die Steuertransaktionen in Datenblöcken des verteilten Datenbanksystems gespeichert werden;
   - die Steuertransaktionen mittels der Datenblöcke an die Geräte übermittelt werden;
- ein erstes Überprüfungsmodul zum Überprüfen der jeweiligen Ausführungsanforderungen zum Ausführen der Steuerbefehle einer der Steuertransaktionen durch ein entsprechendes Gerät, wobei
   - die gerätespezifischen Anforderungen für das entsprechende Gerät überprüft werden; und/oder
   - überprüft wird, ob Bestätigungstransaktionen für die vorausgesetzten Steuerbefehle in Datenblöcken des verteilten Datenbanksystems verfügbar sind;
- ein Ausführungsmodul zum Ausführen der Steuerbefehle durch das entsprechende Gerät abhängig von einem Ergebnis des Überprüfens;
- ein zweites Speichermodul zum Speichern des Ergebnisses des Ausführens der Steuerbefehle in Bestätigungstransaktionen der Datenblöcke des verteilten Datenbanksystems.

Das Ausführungsbeispiel für ein Steuersystem zum Steuern und/oder Überwachen von Geräten kann in einer weiteren Variante, die beispielsweise (daten)blocklos implementiert ist, folgendes umfassen:
- ein erstes Bestimmungsmodul (110) zum Bestimmen von Ausführungsanforderungen für eine Ausführung von Steuerbefehlen durch die Geräte, wobei
   - in den Ausführungsanforderungen gerätespezifische Anforderungen und/oder vorausgesetzte Steuerbefehle gespeichert sind;
- ein verteiltes Datenbanksystem (BC) aufweisend,
   - eine Vielzahl von Knoten (BCN, BCN D), wobei die Knoten (300, BCN, BCN_D) und die Geräte (300, D, BCN_D) über ein erstes Kommunikationsnetzwerk (NW1) miteinander verbunden sind;
- ein erstes Zuordnungsmodul (120) zum Zuordnen der jeweiligen Ausführungsanforderungen zu den Steuerbefehlen;
- ein erstes Speichermodul (130) zum Speichern der jeweiligen Steuerbefehle mit den zugeordneten Ausführungsanforderungen in Steuertransaktionen, wobei
   - die Steuertransaktionen mittels des verteilten Datenbanksystems (BC) gespeichert werden;
   - die Steuertransaktionen des verteilten Datenbanksystems (BC) an die Geräte (300, D, BCN_D) übertragen werden;
- ein optionales erstes Überprüfungsmodul (140) zum Überprüfen der jeweiligen Ausführungsanforderungen zum Ausführen der Steuerbefehle einer der Steuertransaktionen durch ein entsprechendes Gerät, wobei
   - die gerätespezifischen Anforderungen für das entsprechende Gerät überprüft werden; und/oder
   - überprüft wird, ob Bestätigungstransaktionen für die vorausgesetzten Steuerbefehle in Datenblöcken des verteilten Datenbanksystems verfügbar sind;
- ein optionales erstes Ausführungsmodul (150, 150_D) zum Ausführen der Steuerbefehle durch das entsprechende Gerät abhängig von einem Ergebnis des Überprüfens;
- ein optionales zweites Speichermodul (160) zum Speichern des Ergebnisses des Ausführens der Steuerbefehle in Bestätigungstransaktionen der Datenblöcke des verteilten Datenbanksystems.

Im Einzelnen zeigt die Fig. 1 Blöcke B, beispielsweise einen ersten Block B1, einen zweiten Block B2 und einen dritten Block B3, der Blockkette BC.

Die Blöcke B umfassen jeweils mehrere Transaktionen T. Die Transaktionen T können dabei Steuertransaktionen und/oder Bestätigungstransaktionen umfassen.

Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten Vorgänger-Block gebildet wird. Somit umfasst der erste Block B1 eine erste Verkettungsprüfsumme CRC1 von seinem Vorgänger-Block, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen HashFunktion wie z.B. SHA-256, KECCAK-256 oder SHA-3 gebildet werden. Beispielsweise kann die Verkettungsprüfsumme zusätzlich über die Datenblockprüfsumme berechnet werden oder der Header umfasst die Datenblockprüfsumme (die Datenblockprüfsumme ist im Nachgang erläutert).

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen, so wie es in den Ausführungsformen der Erfindung erläutert wurde.

Die Blockkette BC selbst wird durch eine Blockketten-Infrastruktur mit mehreren Blockketten-Knoten BCN, BCN_D realisiert. Bei den Knoten kann es sich beispielsweise um Rechner, Blockkettenorakel, vertrauenswürdige Knoten oder um eines oder mehrere oder alle der Geräte handeln, die gesteuert bzw. überwacht werden sollen. Mit anderen Worten können insbesondere die Geräte entweder als Blockkettenknoten ausgebildet sein, die dann beispielsweise als Geräteknoten BCN_D bezeichnet werden. Geräte, die beispielsweise nicht als Blocckettenknoten ausgebildet sind und beispielsweise nur lesend auf die Blockkette zugreifen, werden insbesondere als blocckettenexterne Geräte D bezeichnet. Die Knoten sind über ein erstes Netzwerk NW1 (z. B. ein Kommunikationsnetzwerk wie das Internet oder ein Ethernet-Netzwerk) miteinander kommunikativ verbunden. Mittels der Blockketten-Infrastruktur werden beispielsweise zumindest ein Teil der Datenblöcke B oder alle Datenblöcke B der Blockkette BC für einen Teil oder alle Knoten der Blockkette repliziert.

Insbesondere können unter Geräten blockkettenexterne Geräte D verstanden werden oder Geräteknoten BCN_D verstanden werden.

Das Steuersystem, das mittels der Blockkette BC realisiert ist, umfasst zudem ein erstes Bestimmungsmodul 110, ein erstes Zuordnungsmodul 120, ein erstes Speichermodul 130, ein erstes Überprüfungsmodul 140, ein erstes Ausführungsmodul 150 und ein zweites Speichermodul 160, die über das Steuersystem (z. B. einen Bus) oder über die Blockkette und deren Infrastruktur kommunikativ miteinander verbunden sind (z. B. das erste Netzwerk NW1). Das erste (Kommunikations-)Netzwerk NW1 kann dabei ein Mobilfunknetzwerk, ein Ethernet-Netzwerk, ein WAN, ein LAN oder das Internet sein.

Das erste Bestimmungsmodul 110 ist zum Bestimmen von Ausführungsanforderungen für eine Ausführung von Steuerbefehlen durch die Geräte eingerichtet, wobei in den Ausführungsanforderungen gerätespezifischen Anforderungen und/oder vorausgesetzte Steuerbefehle gespeichert sind bzw. diese umfasst. Bei einer konkreten Implementierung können die Ausführungsanforderungen (oder einfach nur Anforderungen genannt) beispielsweise in Anforderungsdatensätzen gespeichert werden, die wiederum dann in den Transaktionen (z. B. in Steuertransaktionen) gespeichert werden. Das erste Bestimmungsmodul selbst kann beispielsweise als Softwarekomponente (z. B. als Smart-Contract) oder als Hardwarekomponente oder als eine Kombination aus Hardware- und Softwarekomponenten realisiert werden.

In einer weiteren Variante umfasst das Bestimmungsmodul 110 das Zuordnungsmodul 120 selbst oder die Funktionalitäten des Zuordnungsmoduls 120.

Als Softwarekomponente kann das erste Bestimmungsmodul 110 beispielsweise als Smart-Contract realisiert sein, der durch die Blockkette bzw. deren Infrastruktur ausgeführt wird. Hierzu ist der Smart-Contract beispielsweise in Transaktionen gespeichert, die wiederum in Datenblöcken oder Blöcken der Blockkette BC gespeichert werden.

Als Hardwarekomponente kann das erste Bestimmungsmodul 110 beispielsweise durch ein Blockketten-Orakel und/oder einem Knoten/Gerät der Blockkette realisiert werden, die insbesondere beispielsweise vertrauenswürdig sind und mittels eines digitalen Zertifikats oder digitaler Signaturen die Ausführungsanforderungen signieren.

Optional kann das Steuersystem ein erstes Zerlegemodul umfassen, das beispielsweise als integrales Modul des ersten Bestimmungsmoduls 110 ausgebildet ist oder als separates Modul (z. B. als Software- und/oder Hardwarekomponente) ausgebildet ist - analog zum ersten Bestimmungsmodul (z. B. als Smart-Contract der Blockkette). Das erste Zerlegemodul ist dazu eingerichtet, eine Befehlsfolge in die entsprechenden Steuerbefehle zu zerlegen und dem Steuersystem, insbesondere dem ersten Bestimmungsmodul bzw. dem ersten Speichermodul, bereitzustellen.

Die Befehlsfolge kann dabei Steuerbefehle für eine Vielzahl von Geräten, z. B. Fertigungsmaschinen, umfassen, damit diese einen Gegenstand oder ein Produkt, z. B. eine Gasturbine oder einen Elektromotor, erstellen. Alternativ oder zusätzlich umfasst die Befehlsfolge eine Spezifikation des Produkts, die durch die Geräte umgesetzt werden soll. Die Befehlsfolge muss nicht zwangsläufig auf die Fertigung eines Produktes gerichtet sein. Sie kann beispielsweise auch die Steuerung eines Energieversorgungsnetzes sein. Die Befehlsfolge selbst kann dabei beispielsweise ein Smart-Contract sein, der in der Blockkette gespeichert wurde. Dieser Smart-Contract kann dann beispielsweise von dem Steuersystem (bzw. dem ersten Zerlegemodul und/oder dem ersten Bestimmungsmodul) mit der Blockkette bzw. deren Infrastruktur ausgewertet werden.

Auch kann die Befehlsfolge beispielsweise verschlüsselt sein, sodass das erste Bestimmungsmodul 110 oder das erste Zerlegemodul die Befehlsfolge zunächst entschlüsseln muss, bevor die Befehlsfolge zerlegt werden kann.

Alternativ oder zusätzlich sind die Steuerbefehle der Befehlsfolge verschlüsselt und entsprechende Anforderungen für deren Ausführung in der Befehlsfolge als Klartext hinterlegt.

Die Befehlsfolge selbst und/oder die Steuerbefehle können dabei beispielsweise dem Steuersystem durch einen Nutzer, durch eine Schnittstelle, durch eine andere Datenbank oder durch ein Eingabegerät bereitgestellt werden.

Alternativ oder zusätzlich werden die Steuerbefehle und/oder die Ausführungsanforderungen durch das erste Bestimmungsmodul 110 verschlüsselt, um beispielsweise einen Know-How-Schutz zu realisieren. Beispielsweise umfassen dann das entsprechende Gerät D zum Ausführen der Steuerbefehle und/oder das erste Überprüfungsmodul 140 und/oder das erste Ausführungsmodul 150, 150_D über entsprechende kryptographische Mittel. Beispielsweise sind die kryptographischen Mittel ein entsprechender kryptographischen Schlüssel, um die Steuerbefehle und/oder die Ausführungsanforderungen zu entschlüsseln.

Das erste Zerlegemodul und das erste Bestimmungsmodul zerlegen zunächst die Befehlsfolge in Steuerbefehle oder bestimmen die Steuerbefehle anhand der Befehlsfolge, wobei die Steuerbefehle auch eine Gruppe von Steuerbefehlen oder mehrere Steuerbefehle sein können. Das erste Bestimmungsmodul 110 kennt vorzugsweise die verfügbaren Geräte und/oder Knoten und bestimmt für die Steuerbefehle (die auch eine Gruppe von Steuerbefehlen sein können) Ausführungsanforderungen. Alternativ können die Ausführungsanforderungen bereits in der Befehlsfolge kodiert/gespeichert sein und das erste Bestimmungsmodul 110 bestimmt anhand dieser Information die Ausführungsanforderungen für die entsprechenden Steuerbefehle.

Zusätzlich kann das Steuersystem einen Optimierer umfassen, der anhand der Ausführungsanforderungen eine Ausführung der Steuerbefehle durch die Geräte anhand eines vorgegebenen Kriteriums optimiert. Alternativ bestimmt der Optimierer die Ausführungsanforderungen und stellt sie dem ersten Bestimmungsmodul 110 bereit.

Das Steuersystem ist dadurch beispielsweise in der Lage, einen Fertigungsprozess nach den vorgegeben Kriterien zu optimieren. Die vorgegebenen Kriterien können beispielsweise die Fertigungszeit, die verursachten Kosten oder die aufzuwendende Energie sein. Der Optimierer kann beispielsweise ein integrales Modul des ersten Zerlegemoduls oder des ersten Bestimmungsmoduls sein. Alternativ kann der Optimierer als eigenständiges Modul des Steuersystems ausgebildet sein.

Ist der Optimierer beispielsweise ein integrales Modul des Zerlegemoduls oder des Bestimmungsmoduls kann er beim Zerlegen der Befehlsfolge in Steuerbefehle und beim Bestimmen der Ausführungsanforderungen die Optimierung vornehmen. Dabei berücksichtigt das erste Zerlegemodul oder das erste Bestimmungsmodul 110 mittels des Optimierers, beispielsweise beim Zerlegen der Befehlsfolge in die Steuerbefehle, das vorgegebene Kriterium.

Ist beispielsweise das Kriterium, die Fertigungszeit bei der Produktion eines Produktes zu optimieren (z. B. Fertigungszeit für das Produkt möglichst gering zu halten), wird die Befehlsfolge derart zerlegt und/oder entsprechend optimierte Ausführungsanforderungen berechnet, dass die Einzelkomponenten des Produktes parallel von mehreren Geräten hergestellt werden - also die entsprechenden Steuerbefehle in Steuertransaktionen von diesen abgearbeitet werden. Ist beispielsweise das Kriterium, die Fertigungskosten bei der Produktion eines Produktes zu optimieren, wird die Befehlsfolge derart zerlegt und/oder entsprechend optimierte Ausführungsanforderungen berechnet, dass die Einzelkomponenten seriell von einem Gerät (z. B. dem entsprechenden Gerät) oder möglichst wenigen Geräten hergestellt werden - also die entsprechenden Steuerbefehle in Steuertransaktionen von den entsprechenden Knoten/Geräte abgearbeitet werden. Um dies zu steuern, werden beispielsweise durch den Optimierer die entsprechenden Informationen an das Bestimmungsmodul übergeben, sodass das Bestimmungsmodul diese Informationen in den Ausführungsanforderungen hinterlegt.

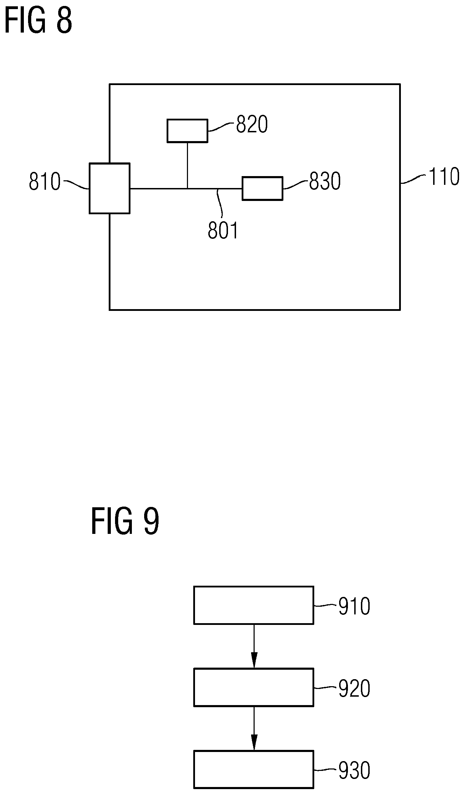

In einer Variante ist das Bestimmungsmodul ein Bestimmungsmodul für ein verteiltes Datenbanksystem oder für ein Steuersystem mit einem verteilten Datenbanksystem zum Steuern und/oder Überwachen von Geräten. In dieser Variante weist es einen Prozessor und optional eine Speichereinheit auf. Der Prozessor ist zum Bestimmen von Ausführungsanforderungen für eine Ausführung von Steuerbefehlen durch die Geräte eingerichtet, wobei in den Ausführungsanforderungen gerätespezifische Anforderungen und/oder vorausgesetzte Steuerbefehle gespeichert sind und die Ausführungsanforderungen in Transaktionen des verteilten Datenbanksystems gespeichert sind. Zusätzlich kann es beispielsweise die Ausführungsvarianten und die genannten Merkmale aus den Fig. 8 und 9 umfassen.

Das erste Zuordnungsmodul 120 ist zum Zuordnen der jeweiligen Ausführungsanforderungen zu den Steuerbefehlen eingerichtet. Das erste Zuordnungsmodul 120 kann beispielsweise als Software- und/oder Hardwarekomponente ausgebildet sein - analog zum ersten Bestimmungsmodul 110 (z. B. als Smart-Contract der Blockkette oder als vertrauenswürdige Knoten der Blockkette). Das erste Zuordnungsmodul 120 kann insbesondere durch die Blockkette bzw. einem Smart-Contract realisiert werden oder ist eine Softwarekomponente der Blockketten-Infrastruktur. Werden beispielsweise für das Ausführen von Steuerbefehlen bzw. Steuertransaktionen keine vorausgesetzten Steuerbefehle benötigt, können die vorausgesetzten Steuerbefehle insbesondere leer sein. Beispielsweise können sie mit einer Null belegt sein, mit einem Leerstring belegt sein oder einem Wert, der angibt, dass keine vorausgesetzten Steuerbefehle notwendig sind, belegt sein. Alternativ kann beispielsweise einem Teil der Steuerbefehle keine Ausführungsanforderung zugeordnet sein, wobei insbesondere zumindest einem der Steuerbefehle zumindest eine Ausführungsanforderung zugeordnet ist.

Das erste Speichermodul 130 ist zum Speichern der jeweiligen Steuerbefehle mit den zugeordneten Ausführungsanforderungen in Steuertransaktionen eingerichtet, wobei die Steuertransaktionen in Datenblöcken B des verteilten Datenbanksystems (BC) gespeichert werden. Die Steuertransaktionen werden dabei beispielsweise mittels der Datenblöcke B an die Geräte D, BCN_D übertragen. Dies erfolgt beispielsweise dadurch, dass die entsprechenden Datenblöcke durch die Blockkette über das erste Netzwerk NW1 an die entsprechenden Knoten übertragen werden, z. B. wenn die Datenblöcke für die Blockkette und/oder Knoten und/oder spezifische Knoten repliziert werden. Handelt es sich beispielsweise um ein blockketten-externes Gerät, so kann dieses beispielsweise über eine Schnittstelle (z. B. ein Web-Interface) der Blockkette an ein solches Gerät übertragen werden oder ein solches Gerät ruft die entsprechenden Daten selbst von der Blockkette ab z. B. nach einem vorgegebenen Zeitintervall.

Vorzugsweise werden beim Bestimmen der Steuerbefehle durch das erste Bestimmungsmodul 110 diese gerätespezifisch bestimmt. Das bedeutet insbesondere, dass zunächst Gruppen von Steuerbefehlen gebildet werden, die vollständig von einem entsprechenden Gerät abgearbeitet werden können. Diesen Gruppen von Steuerbefehlen können auch einfach nur Steuerbefehle genannt werden. Für diese Gruppen von Steuerbefehlen bzw. Steuerbefehle werden dann die Ausführungsvoraussetzungen berechnet - so wie dies oben erläutert wurde. Beim Speichern werden dann eine entsprechende Gruppe von Steuerbefehlen bzw. die entsprechenden Steuerbefehle zusammen mit den zugehörigen/entsprechenden Ausführungsvoraussetzungen in einer Steuertransaktion gespeichert. Entsprechend umfassen vorzugsweise die Steuertransaktionen gerätespezifische Steuerbefehle.

Es kann sich bei dem Bestimmungsmodul beispielsweise auch um ein erfindungsgemäßes Bestimmungsmodul nach den Ansprüche 17 - 28 handeln oder eine seiner Ausführungsformen bzw. ein Bestimmungsmodul, wie es in den Fig. 8 und/oder 9 erläutert wird.

Das Speichern kann auf unterschiedliche Weise realisiert werden. Beispielsweise kann ein Steuerbefehl oder mehrere Steuerbefehle in einer spezifischen Steuertransaktion gespeichert werden, wobei diese spezifische Steuertransaktion die entsprechenden Ausführungsanforderungen für den Steuerbefehl oder die mehreren Steuerbefehle umfasst. Dieser integrale Ansatz ist vorteilhaft, um auf die Daten möglichst einfach zuzugreifen.

Alternativ können die entsprechenden Ausführungsanforderungen in einer eigenen bzw. separaten Steuertransaktion gespeichert sein, wobei die eigene Transaktion eine Referenz oder einen Hinweis umfasst, auf welchen Steuerbefehl oder welche Steuerbefehle sich diese entsprechende Ausführungsanforderungen beziehen. Dies erfolgt beispielsweise mit einer Blocknummer (eines Blocks) mit den entsprechenden (Steuer-)Transaktionen (mit Steuerbefehlen), eine Prüfsumme des Blocks oder der Transaktion, der/die die Steuerbefehle umfasst. Dies ist vorteilhaft, wenn die Ausführungsanforderungen erst während der Abarbeitung der Steuerbefehle durch die entsprechenden Geräte bestimmt werden. Ein Gerät (bzw. das erste Überprüfungsmodul 140 bzw. das erste Ausführungsmodul 150), z. B. das entsprechende Gerät, das die Steuerbefehle oder einen Teil der Steuerbefehle einer Steuertransaktion abarbeitet, beginnt eine Abarbeitung der entsprechenden Steuerbefehle erst, wenn die entsprechenden Ausführungsanforderungen in einer Steuertransaktion in der Blockkette verfügbar sind. Andernfalls wartet das Gerät bzw. das erste Überprüfungsmodul 140 bzw. das erste Ausführungsmodul 150 bis diese Steuertransaktion mit den entsprechenden Ausführungsanforderungen durch die Blockkette BC bereitgestellt werden.

Das erste Speichermodul 130 kann beispielsweise als Software- und/oder Hardwarekomponente ausgebildet sein - analog zum ersten Bestimmungsmodul 110 (z. B. als Smart-Contract der Blockkette oder als vertrauenswürdige Knoten der Blockkette). Das erste Speichermodul 130 kann insbesondere durch die Blockkette bzw. einem Smart-Contract realisiert werden oder ist eine Softwarekomponente der Blockketten-Infrastruktur.

In einer weiteren Variante umfasst das erste Speichermodul 130 das Zuordnungsmodul 120 selbst oder die Funktionalitäten des Zuordnungsmoduls 120.

Das erste Überprüfungsmodul 140 ist zum Überprüfen der jeweiligen Ausführungsanforderungen beim Ausführen der Steuerbefehle einer der Steuertransaktionen durch ein entsprechendes Gerät eingerichtet, wobei
- die gerätespezifischen Anforderungen der jeweiligen Ausführungsanforderungen der jeweiligen Steuertransaktion für das entsprechende Gerät überprüft werden; und/oder
- überprüft wird, ob Bestätigungstransaktionen für die vorausgesetzten Steuerbefehle der jeweiligen Ausführungsanforderungen der jeweiligen Steuertransaktion in Datenblöcken des verteilten Datenbanksystems verfügbar sind.

Dabei ist insbesondere mit "einem der Steuerbefehle" ein oder mehrere der Steuerbefehle gemeint (sprich es handelt sich z. B. um einen oder mehrere Steuerbefehle). Alternativ ist unter "mit einem der Steuerbefehle", "mindestens einen der Steuerbefehl" zu verstehen. Bei "einem der Steuerbefehle" handelt es sich vorzugsweise um die Steuerbefehle einer entsprechenden Steuertransaktion.

Im einfachsten Fall überprüft das Überprüfungsmodul einen eindeutigen Identifizierer (z. B. eine Unique Identifier (UID)) der in einer Steuertransaktion angibt, welches Gerät die Steuerbefehle ausführen soll. Hierdurch kann dann festgestellt werden, ob die entsprechende Steuertransaktion von dem Geräte oder Knoten ausgeführt werden kann. Das Ergebnis dieser Prüfung wird im Prüfergebnis festgehalten. Ein solcher eindeutiger Identifizierer kann beispielsweise durch das Bestimmungsmodul festgelegt bzw. ermittelt werden. Hierzu kann beispielsweise das Bestimmungsmodul über ein Verzeichnis aller Identifizierer der Geräte/Knoten umfassen. Für eine Ausführung der Steuerbefehle mittels der entsprechenden Steuertransaktionen werden die entsprechenden eindeutigen Identifizierer für die Geräte oder die Knoten, die die Steuerbefehle ausführen sollen, in den Ausführungsanforderungen und/oder den Steuertransaktionen und/oder Steuerbefehlen gespeichert (z. B. durch das Bestimmungsmodul selbst oder das erste Speichermodul).

Dies ist dahingehend vorteilhaft, damit die Geräte/Knoten beispielsweise schnell feststellen können, ob die entsprechenden Steuerbefehle z. B. durch ein bestimmtes Gerät ausgeführt werden können. Dabei ist den Geräten bzw. Knoten beispielsweise ein eindeutiger Identifizierer (Unique Identifier (UID)) zugeordnet. Das Steuersystem bzw. das Bestimmungsmodul kennt insbesondere die entsprechenden eindeutigen Identifizierer der Geräte (z. B. mit den Daten zu Geräten/Knoten im Konfigurationsspeicher gespeichert) und weist beim Bestimmen der Steuerbefehle entweder den Steuerbefehlen selbst und/oder mittels der Ausführungsanforderungen und/oder mittels der Steuertransaktionen die entsprechenden eindeutigen Identifizierer zu. Bei den zugewiesenen bzw. zugeordneten eindeutigen Identifizierern handelt es sich insbesondere um die entsprechenden eindeutigen Identifizierer der Geräte oder der Knoten, die die Steuerbefehle ausführen sollen.

Das erste Überprüfungsmodul 140 kann beispielsweise als Software- und/oder Hardwarekomponente ausgebildet sein - analog zum ersten Bestimmungsmodul 110 (z. B. als Smart-Contract der Blockkette oder als vertrauenswürdige Knoten der Blockkette). Das erste Überprüfungsmodul 140 kann insbesondere durch die Blockkette bzw. einem Smart-Contract realisiert werden oder ist eine Softwarekomponente der Blockketten-Infrastruktur oder ist eine Komponente eines Knotens oder eines Gerätes, das die Steuerbefehle ausführen kann.

Ist die Überprüfung der Steuerbefehle eines Datenblocks, die durch das entsprechende Gerät ausgeführt werden sollen, durch das erste Überprüfungsmodul 140 abgeschlossen, so wird ein Ergebnis der Prüfung in einem Datensatz bereitgestellt. Das erste Überprüfungsmodul 140 kann beispielsweise noch zusätzliche Überprüfungen durchführen. Beispielsweise können die Transaktionsprüfsumme oder die Datenblockprüfsumme überprüft werden. Handelt es sich bei einer entsprechenden Prüfsumme um eine digitale Signatur oder ein Zertifikat, so kann beispielsweise überprüft werden, ob der Ausstellende bzw. Prüfsummenerzeuger überhaupt berechtigt ist, dass seine Steuerbefehle auf dem Gerät bzw. durch das Gerät abgearbeitet werden.

Es kann beispielsweise auch überprüft werden, ob das entsprechende Gerät über ein gefordertes digitales Zertifikat verfügt, das beispielsweise aussagt, dass das entsprechende Gerät vertrauenswürdig ist. Dies kann beispielsweise notwendig sein, wenn es sich um Steuerbefehle handelt, die Know-How umfassen, das nicht öffentlich zugänglich gemacht werden soll.

Es ist beispielsweise auch denkbar, dass die Steuerbefehle kryptographisch verschlüsselt sind und vorzugsweise nur das entsprechende Gerät D Mittel umfasst (z. B. einen entsprechenden Schlüssel), diese kryptographische Verschlüsselung aufzuheben. Diese Mittel kann das entsprechende Gerät D selbst umfassen oder das Ausführungsmodul 150, 150_D umfasst diese Mittel.

Das Ausführungsmodul 150, 150_D ist zum Ausführen der Steuerbefehle durch das entsprechende Gerät abhängig von dem Ergebnis des Überprüfens eingerichtet. Ergibt die Überprüfung bzw. umfasst das Ergebnis eine Bestätigung für das Ausführen der Steuerbefehle, führt das entsprechende Gerät diese Steuerbefehle aus. Es kann beispielsweise in eine Komponente ein Loch bohren entsprechend der Spezifikationen der Steuerbefehle, die ursprünglich in der Befehlsfolge spezifiziert wurden. Ergibt die Überprüfung bzw. umfasst das Ergebnis keine Bestätigung für das Ausführen der Steuerbefehle, so wird eine Abarbeitung/Ausführung der Steuerbefehle unterbunden.

Sagt das Ergebnis beispielsweise aus, dass die Steuerbefehle nicht durch das entsprechende Gerät ausgeführt werden sollen, kann beispielsweise ein Steuersignal bereitgestellt werden. Mit dem Steuersignal können beispielsweise ein Alarm, ein Servicetechniker oder die Steuerbefehle (vorzugsweise alle), die anhand einer Befehlsfolge erzeugt wurden, für ungültig erklärt werden, sodass andere Steuerbefehle der Befehlsfolge nicht mehr durch andere Geräte ausgeführt werden. Hierfür kann beispielsweise eine entsprechende Steuertransaktion mit einem solchen Steuerbefehl für alle Geräte in einem Block der Blockkette BC gespeichert werden und an die Geräte mittels der Blockkette BC übermittelt werden. Eine solche Steuertransaktion umfasst vorzugsweise ebenfalls Ausführungsanforderungen, die eine Priorität umfassen. Diese Priorität ist vorzugsweise höher als eine Priorität der übrigen Steuerbefehle. Mit dieser erhöhten Priorität wird die entsprechende Steueranweisung bevorzugt von den Geräten abgearbeitet, um beispielsweise die restlichen Steuerbefehle der Befehlsfolge zu invalidieren (für ungültig erklären) bzw. deren Ausführung zu unterbinden.

Ist das erste Überprüfungsmodul 140 beispielsweise ein Modul der Blockkette BC, so umfasst das erste Überprüfungsmodul 140 beispielsweise eine Liste der Geräte mit ihren gerätespezifischen Eigenschaften, anhand derer die gerätespezifischen Anforderungen überprüft werden können. Alternativ kann das erste Überprüfungsmodul 140 eine Liste der Geräte und ihre Netzwerkadressen umfassen, und die entsprechenden gerätespezifischen Eigenschaften bei den Geräten selbst abfragen. Dies ist vorteilhaft, um den aktuellen Betriebszustand der Geräte bei der Überprüfung zu berücksichtigen.

Das erste Ausführungsmodul 150, 150_D kann beispielsweise als Software- und/oder Hardwarekomponente ausgebildet sein - analog zum ersten Bestimmungsmodul 110 (z. B. als Smart-Contract der Blockkette oder als vertrauenswürdige Knoten der Blocckette). Das Ausführungsmodul kann insbesondere durch die Blockkette bzw. einen Smart-Contract realisiert werden oder ist eine Softwarekomponente der Blockketten-Infrastruktur oder ist eine Komponente eines Knotens (z. B. ein Blockkettenausführungsmodul 150) oder eines Gerätes (z. B. ein Geräte-ausführungsmodul 150_D), das die Steuerbefehle ausführen kann.

Ist das erste Ausführungsmodul beispielsweise ein Modul der Blockkette, so umfasst das erste Ausführungsmodul 150 beispielsweise eine Liste der Geräte und deren Netzwerkadressen, um die Geräte für das Abarbeiten der Steuerbefehle anzusteuern.

Das zweite Speichermodul 160 ist zum Speichern des Ergebnisses des Ausführens der Steuerbefehle in Bestätigungstransaktionen der Datenblöcke des verteilten Datenbanksystems eingerichtet.

War die Abarbeitung der Steuerbefehle durch das entsprechende Gerät erfolgreich, so wird diese Information in einer Bestätigungstransaktion in der Blockkette gespeichert. Gibt es beispielsweise andere Steuerbefehle, die eine Abarbeitung der nun abgearbeiteten Steuerbefehle voraussetzen (vorausgesetzte Steuerbefehle), können nun diese anderen Steuerbefehle durch ein anderes entsprechendes Gerät oder das gleiche entsprechende Gerät abgearbeitet werden, sofern auch die restlichen Ausführungsanforderungen erfüllt sind.

Das zweite Speichermodul 160 kann beispielsweise als Software- und/oder Hardwarekomponente ausgebildet sein - analog zum ersten Bestimmungsmodul 110 (z. B. als Smart-Contract der Blockkette oder als vertrauenswürdige Knoten der Blockkette). Das zweite Speichermodul 160 kann insbesondere durch die Blockkette bzw. einem Smart-Contract realisiert werden oder ist eine Softwarekomponente der Blockketten-Infrastruktur oder ist eine Komponente eines Knoten, das die Steuerbefehle ausführen kann.

Das Steuersystem und/oder die verteilte Datenbanksystem bzw. seine Knoten (z. B. Blockketten-Knoten, Geräte (Geräteknoten und blockkettenexterne Geräte)) können beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN) ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können. Die weitere/n Komponente/n können beispielsweise ebenfalls über die Blockkette bzw. deren Infrastruktur miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Je nach gewählter Implementierungsvariante kann das verteilte Datenbanksystem das erste Überprüfungsmodul und/oder das erste Ausführungsmodul und/oder das zweite Speichermodul umfassen.

In dieser Implementierungsvariante sind die Geräte einfach gehalten - z. B. ohne derartig korrespondierende Module. Dies ist vorteilhaft, um die Geräte möglichst einfach zu gestalten und an das verteilte Datenbanksystem anzubinden. Dadurch können insbesondere kostengünstige Geräte eingesetzt werden.

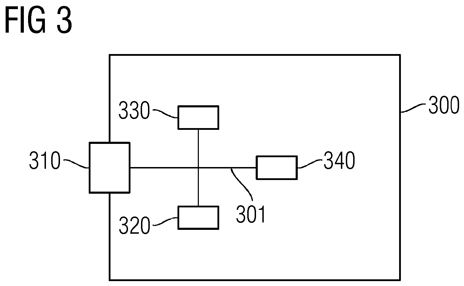

In einer weiteren Implementierungsvariante umfassen die Geräte ein erstes Geräte-Überprüfungsmodul und/oder ein erstes Geräte-Ausführungsmodul und/oder ein zweites Geräte-Speichermodul, so wie dies beispielsweise in Fig. 3 erläutert ist. Je nach gewählter Implementierung können das erste Überprüfungsmodul und/oder das erste Ausführungsmodul und/oder ein zweite Speichermodul bei der Realsierung ihrer Funktionalitäten/Aufgaben auf die korrespondierenden Module der Geräte zugreifen.

Mit anderen Worten kennt das Steuersystem bzw. das verteilte Datenbanksystem die Gerätemodule (z. B. mittels in einer Tabelle gespeicherten Daten). Das erste Überprüfungsmodul 140 und/oder das erste Ausführungsmodul 150 und/oder das zweite Speichermodul 160 verfügen über Informationen, wie die Gerätemodule 150_D angesprochen bzw. angesteuert werden können (z. B. über eine modulinterne Tabelle, die sich vorzugsweise automatisch aktualisiert beispielsweise über Broadcast-Nachrichten im ersten Kommunikationsnetzwerk NW1 oder über das verteilte Datenbanksystem BC). Das erste Überprüfungsmodul und/oder das erste Ausführungsmodul und/oder das zweite Speichermodul implementieren dabei vorzugsweise nur den Teil, der die notwendigen Informationen bzw. Aufgaben an das entsprechende Gerät bzw. die entsprechenden Geräte verteilt bzw. übermittelt (z. B. die Steuertransaktionen oder die Bestätigungstransaktionen oder das Ergebnis des Überprüfens durch das Überprüfungsmodul). Die restliche Funktionalität wird durch die Gerätemodule realisiert.

Dies ist dahingehend vorteilhaft, um rechenintensivere Überprüfungsaufgaben durch das erste Überprüfungsmodul oder Ausführungsaufgaben durch das erste Ausführungsmodul ganz oder teilweise auf die entsprechenden Geräte auszulagern.

Auch kann das Steuersystem noch ein optionales Registrierungsmodul umfassen.

Das Registrierungsmodul kann beispielsweise als Software- und/oder Hardwarekomponente ausgebildet sein - analog zum ersten Bestimmungsmodul 110 (z. B. als Smart-Contract der Blockkette oder als vertrauenswürdige Knoten der Blockkette). Das Registrierungsmodul kann insbesondere durch die Blockkette bzw. einen Smart-Contract realisiert werden oder ist eine Softwarekomponente der Blockketten-Infrastruktur. Alternativ kann das Registrierungsmodul als spezifischer vertrauenswürdiger Knoten realisiert sein, dessen Netzwerkadresse beispielsweise öffentlich bekannt ist. Handelt es sich beispielsweise um ein geschlossenes verteiltes Datenbanksystem, bei dem nur berechtigte Knoten und/oder Geräte an das Steuersystem bzw. an das verteilte Datenbanksystem angebunden werden, so ist insbesondere ausschließlich die Netzwerkadresse des Registrierungsmoduls öffentlich bekannt.

Das Registrierungsmodul ist dazu eingerichtet neue Knoten und/oder Geräte dem Steuersystem hinzuzufügen. Sobald ein neues Gerät und/oder Knoten dem Steuersystem bzw. dem verteilten Datenbanksystem beitreten möchte, wird durch das neue Gerät oder durch den neuen Knoten eine Anfrage an das Registrierungsmodul gesendet. Dies kann direkt erfolgen, indem beispielsweise Knoten- und/oder Geräteinformationen direkt an das Registrierungsmodul übermittelt werden. Erfolgt dies indirekt wird die Anfrage zwischen den Knoten und Modulen des verteilten Datenbanksystems weitergeleitet bis die Anfrage das Registrierungsmodul erreicht.

Die Knoten- und/oder Geräteinformationen können dabei folgendes umfassen:
- Geräteadresse/Knotenadresse
- Betreiber des Gerätes/Knotens
- Funktionsumfang des Gerätes/Knotens
- kryptographische Schlüssel (z. B. zum Überprüfen von Prüfsummen/digitalen Signaturen, die durch das Gerät/den Knoten erzeugt wurden)
- weitere Eigenschaften, die bei der Überprüfung der Ausführungsanforderungen benötigt werden

Die Knoten- und/oder Geräteinformationen können dann beispielsweise im Steuersystem (z. B. in entsprechenden Tabellen) gespeichert werden, damit das Überprüfen und/oder das Ausführen der Steuerbefehle bzw. Steuertransaktionen durch die entsprechenden Module realisiert werden kann.

Handelt es sich bei dem Datenbanksystem beispielsweise um ein geschlossenes verteiltes Datenbanksystem, überprüft das Registrierungsmodul auch, ob das Gerät/der Knoten zugangsbe-rechtigt ist - also ob insbesondere das Gerät/der Knoten als Teil des Steuersystems bzw. des verteilten Datenbanksystems akzeptiert ist. Hierfür stellt das Gerät/der Knoten beispielsweise Authentifizierungsinformationen (kryptographische Schlüssel, Passwörter, usw.) bereit, die durch das Registrierungsmodul überprüft werden.

Handelt es sich bei dem Datenbanksystem beispielsweise um ein offenes verteiltes Datenbanksystem, so werden beispielsweise die Knoten- und/oder Geräteinformationen erfasst.

Je nach Implementierungsvariante sind das Überprüfungsmodul 140 und/oder das Ausführungsmodul 150 und/oder das zweite Speichermodul 160 optionale Module.

Insbesondere kann mittels des Steuersystems beispielsweise auch ein digitaler Zwilling (z. B. in Form einer Blockkette) realisiert werden bzw. das Steuersystem ist ein digitaler Zwilling.

Der digitale Zwilling wird dabei beispielsweise für ein Steuergerät oder ein zu fertigendes Produkt realisiert (bzw. berechnet oder erzeugt).

Das verteilte Datenbanksystem nach einem der Ansprüche 1 - 15 kann beispielsweise das erste verteilte Datenbanksystem nach einem der Ansprüche 16-26 sein.

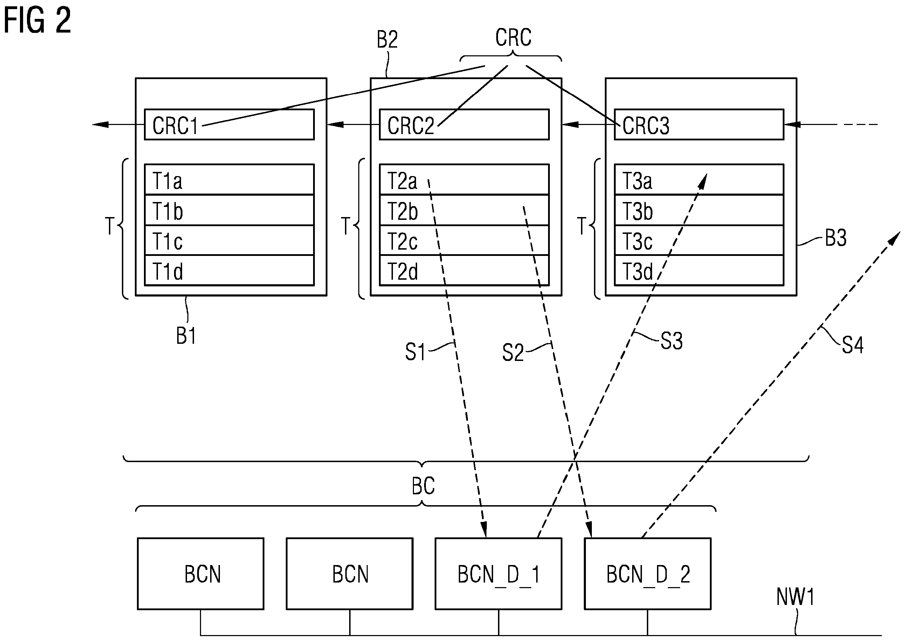

Die Fig. 2 zeigt ein zweites Ausführungsbeispiel der Erfindung, das eine Steuerung von Geräten implementiert, die als Knoten der Blockkette BC realisiert sind.

Diese Variante kann beispielsweise auch durch das Ausführungsbeispiel von Fig. 1 realisiert werden bzw. ist mit dieser kompatibel. Entsprechend kann das Steuersystem aus Fig. 2 ebenfalls eines oder mehrere Module des Steuersystems aus Fig. 1 aufweisen.

Durch das Steuersystem, das als Blockkette BC realisiert ist, werden mehrere Transaktionen T bereitgestellt, die auch Steuertransaktionen umfassen können.

Beispielsweise handelt es sich bei der fünften Transaktion T2a um eine erste Steuertransaktion, die erste Steuerbefehle und diesen Steuerbefehlen zugeordneten erste Ausführungsanforderungen umfasst. Bei der sechsten Transaktion T2b handelt es sich beispielsweise um eine zweite Steuertransaktion, die zweite Steuerbefehle und diesen Steuerbefehlen zugeordneten zweite Ausführungsanforderungen umfasst. Die zweiten Ausführungsanforderungen fordern als vorausgesetzte Steuerbefehle, dass die zweiten Steuerbefehle durch ein bestimmtes Gerät, beispielsweise einen zweiten Geräteknoten BCN_D_2 ausgeführt werden, und dass die ersten Steuerbefehle durch einen bestimmten Geräteknoten, beispielsweise einen ersten Geräteknoten BCN_D_1, ausgeführt sein müssen, bevor der zweite Geräteknoten BCN_D_2 mit der Abarbeitung der zweiten Steuerbefehle beginnen kann.

Mit anderen Worten ist durch die zweiten Ausführungsanforderungen für die zweiten Steuerbefehle festgelegt, dass mit deren Ausführung begonnen wird, wenn die ersten Steuerbefehle ausgeführt wurden und eine Bestätigung für deren Ausführung in (Bestätigungs-)Transaktionen, die in Blöcken der Blockkette gespeichert sind, durch die Blockkette bereitgestellt werden.

In einem ersten Schritt S1 werden die ersten Steuerbefehle der ersten Steuertransaktion durch die Blockkette an den ersten Geräteknoten BCN_D_1 übermittelt und durch den ersten Geräteknoten BCN_D_1 ausgeführt. Nach erfolgreicher Abarbeitung der ersten Steuerbefehle durch den ersten Geräteknoten BCN_D_1 wird hierfür in einem zweiten Schritt S2 eine Bestätigung über diese Abarbeitung in eine Bestätigungstransaktion geschrieben und in einem Datenblock der Blockkette gespeichert. Dies ist in diesem Ausführungsbeispiel die neunte Transaktion T3a.

Nachdem die Ausführungsanforderungen für die zweiten Steuerbefehle erfüllt sind, wird in einem dritten Schritt S3 durch die Blockkette die zweite Steuertransaktion dem zweiten Geräteknoten BCN_D_2 übermittelt. Dies kann beispielsweise durch die Blockkette selbst - so wie dies z. B. in Fig. 1 dargestellt ist - realisiert werden oder durch ein separates Modul oder Gerät durchgeführt werden.

Der zweite Geräteknoten BCN D 2 arbeitet die zweiten Steuerbefehle ab. Ist das Abarbeiten erfolgreich, speichert der zweite Geräteknoten BCN_D_2 eine zweite Bestätigungstransaktion in einem Block der Blockkette in einem Schritt S4.

Unter einem Geräteknoten ist hierbei insbesondere ein Knoten der Blockkette zu verstehen, der zugleich ein Gerät ist oder Geräteeigenschaften aufweist, um Steuerbefehle abzuarbeiten.

Mit der Erfindung können auf einfache Weise komplexe Steuerbefehlsketten (auch Befehlsfolgen genannt) in einem (Automatisierungs-)Netzwerk, bei welchem Knoten und/oder Geräteknoten und/oder blockkettenexternen Geräte miteinander vernetzt sind, abgearbeitet werden, selbst wenn sich unterschiedliche Betreiber der einzelnen Knoten und Geräte nicht vertrauen.

Insbesondere kann mittels des verteilten Datenbanksystems beispielsweise auch ein digitaler Zwilling (z. B. in Form einer Blockkette) realisiert werden bzw. das verteilte Datenbanksystem ist ein digitaler Zwilling.

Der digitale Zwilling wird dabei beispielsweise für ein verteiltes Datenbanksystem oder ein zu fertigendes Produkt (z. B. das Gerät aus Fig. 3 oder ein anderes Produkt/Gerät) realisiert (bzw. berechnet oder erzeugt).

Die Fig. 3 zeigt ein drittes Ausführungsbeispiel der Erfindung, das ein Gerät betrifft, so wie es in der Fig. 1 oder der Fig. 2 mit den zugehörigen Ausführungsbeispielen erläutert wurde.

Das Gerät 300 umfasst ein erstes Kommunikationsmodul 310, ein optionales erstes Überprüfungsmodul 320, ein optionales erstes Ausführungsmodul 330 und ein optionales zweites Speichermodul 340, die über einen Bus 301 miteinander kommunikativ in Verbindung stehen. Ein Bus kann hierbei auch ein einfacher Programmfluss oder ein Datenaustausch zwischen den entsprechenden Komponenten sein.

Das Gerät kann beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können. Die weitere/n Komponente/n können beispielsweise ebenfalls über den Bus miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das erste Kommunikationsmodul 310, beispielsweise eine Ethernet-Schnittstelle, ist zum Empfangen von Datenblöcken eines verteilten Datenbanksystems (beispielsweise einer Blockkette) eingerichtet, wobei
- Steuertransaktionen mit Steuerbefehlen für das Gerät in den Datenblöcken des verteilten Datenbanksystems gespeichert sind (mit anderen Worten werden die Steuertransaktionen mit den gespeicherten Steuerbefehlen mittels der Datenblöcke des verteilten Datenbanksystems empfangen),
- die Steuertransaktionen Ausführungsanforderungen umfassen,
- die Ausführungsanforderungen gerätespezifische Anforderungen für das Gerät und/oder vorausgesetzte Steuerbefehle umfassen,
- den jeweiligen Steuertransaktionen die entsprechenden Ausführungsanforderungen zugeordnet sind.

Insbesondere kann anhand der den (jeweiligen) Steuertransaktionen zugeordneten Ausführungsanforderungen durch das Gerät festgestellt werden, ob das Gerät die Steuerbefehle der (jeweiligen) Steuertransaktionen ausführen kann und/oder ob die Steuerbefehle für das Gerät zur Ausführung bestimmt sind.

Dabei ist das erste Kommunikationsmodul 310 insbesondere dazu eingerichtet die Steuertransaktionen mittels (oder mit Hilfe) der Datenblöcke des verteilten Datenbanksystems zu empfangen (bzw. die Steuertransaktionen werden mittels des verteilten Datenbanksystems an das Gerät übermittelt und das Gerät empfängt diese Steuertransaktionen dann).

Unter Empfangen ist hier insbesondere zu verstehen, dass die entsprechenden Transaktionen direkt mittels des verteilten Datenbanksystems an das Gerät übermittelt werden oder mittels des verteilten Datenbanksystems dem Gerät derart bereitgestellt werden (z. B. durch einen Knoten oder ein Blockkettenorakel), dass das Gerät die Transaktionen von dem verteilten Datenbanksystem abrufen bzw. empfangen kann.

Das erste Überprüfungsmodul 320 ist zum Überprüfen der jeweiligen Ausführungsanforderungen für ein Ausführen der Steuerbefehle einer der Steuertransaktionen durch das Gerät eingerichtet, wobei
- insbesondere die gerätespezifischen Anforderungen der jeweiligen Ausführungsanforderungen der jeweiligen Steuertransaktion für das Gerät überprüft werden, und/oder
- insbesondere überprüft wird, ob Bestätigungstransaktionen für die vorausgesetzten Steuerbefehle der jeweiligen Ausführungsanforderungen der jeweiligen Steuertransaktion in Datenblöcken des verteilten Datenbanksystems verfügbar sind (z. B. indem das verteilte Datenbanksystem die entsprechenden Bestätigungstransaktionen breitstellt bzw. überprüft wird, ob das verteilte Datenbanksystem die entsprechenden Bestätigungstransaktionen bereitstellt), und/oder
   - insbesondere überprüft wird, ob Bestätigungstransaktionen für die vorausgesetzten Steuerbefehle der jeweiligen Ausführungsanforderungen in dem verteilten Datenbanksystem verfügbar sind.
   Das Gerät überprüft dabei die jeweiligen Ausführungsanforderungen, die den entsprechenden Steuerbefehlen zugeordnet sind. Die Ausführungsanforderungen und/oder die Steuerbefehle sind z. B. in einer der Steuertransaktionen gespeichert. Mit anderen Worten liest das Gerät z. B. die Steuerbefehle einer der empfangenen Steuertransaktionen aus und liest auch die zugehörigen Ausführungsanforderungen aus der entsprechenden Steuertransaktion aus (z. B. aus gleichen Steuertransaktion, die die Steuerbefehle umfasst oder eine separate Steuertransaktion, die die entsprechenden Ausführungsanforderungen umfasst).

Insbesondere überprüft dabei das Gerät, die gerätespezifischen Anforderungen für das Gerät, wobei die gerätespezifischen Anforderungen in den entsprechenden Ausführungsanforderungen gespeichert sind. Mit anderen Worten wird dabei insbesondere überprüft, ob die gerätespezifischen Anforderungen für eine Ausführung der Steuerbefehle erfüllt sind.

Alternativ oder zusätzlich überprüft das Gerät, ob Bestätigungstransaktionen für die vorausgesetzten Steuerbefehle in dem verteilten Datenbanksystem verfügbar sind (z. B. in dem verteilten Datenbanksystem gespeichert sind oder in Datenblöcken des verteilten Datenbanksystems gespeichert sind). Mit anderen Worten wird dabei überprüft, ob für die Ausführung der Steuerbefehle die dafür notwendigen vorausgesetzten Steuerbefehle bereits ausgeführt wurden (und dies insbesondere in Bestätigungstransaktionen entsprechend gespeichert/dokumentiert ist).

Das Ergebnis dieses Überprüfens wird in einem Ergebnis des Überprüfens gespeichert.

Das erste Ausführungsmodul 330 ist zum Ausführen der Steuerbefehle durch das entsprechende Gerät abhängig von dem Ergebnis des Überprüfens eingerichtet. Hierbei werden dann beispielsweise Motoren oder Fräsen durch das Gerät entsprechend der Steuerbefehle angesteuert, wenn das Ergebnis des Überprüfens dies erlaubt.

Das zweite Speichermodul 340 ist zum Speichern des Ergebnisses des Ausführens der Steuerbefehle in Bestätigungstransaktionen der Datenblöcke des verteilten Datenbanksystems eingerichtet.

Die Module können beispielsweise als Hardwarekomponente oder als Softwarekomponente oder eine Kombination aus Hardware- und Softwarekomponenten realisiert werden. Beispielsweise können Softwarekomponenten wie Programmbibliotheken genutzt werden, um mit Programmgebefehlen der Programmbibliotheken den Prozessor derart zu konfigurieren, dass dieser die Funktionalitäten eines entsprechenden Moduls realisiert.

Das Gerät selbst kann ein Knoten einer Blockkette bzw. eines verteilten Datenbanksystems sein.

In einer weiteren Variante könnte das Gerät oder generell das Steuersystem oder die genannten Erfindungen mit ihren Merkmalen mittels eines blocklosen verteilten Datenbanksystems implementiert werden (z. B. mittels der von IOTA verwendeten Architektur). Insbesondere kann ein entsprechender Datenblock dann einer einzelnen (Steuer-)Transaktion entsprechen um z. B. ein blockloses verteiltes Datenbanksystem (z. B. eine blocklose Blockkette) zu realisieren.

In einer solchen Variante umfasst das Gerät ein Kommunikationsmodul zum Empfangen von/der Steuertransaktionen mittels eines/des verteilten Datenbanksystems, wobei
- die Steuertransaktionen gespeicherte Steuerbefehle umfassen,
- die Steuertransaktionen Ausführungsanforderungen umfassen,
- die Ausführungsanforderungen gerätespezifische Anforderungen für das Gerät und/oder vorausgesetzte Steuerbefehle umfassen,
- den jeweiligen Steuertransaktionen die entsprechende Ausführungsanforderungen zugeordnet sind.

In einer weiteren Variante, die (daten)blockbasiert implementiert ist, umfasst das Gerät ein Kommunikationsmodul 310 zum Empfangen von Datenblöcken eines/des verteilten Datenbanksystems, wobei
- Steuertransaktionen mit Steuerbefehlen für das Gerät mittels der Datenblöcke des verteilten Datenbanksystems empfangen werden,
- die Steuertransaktionen Ausführungsanforderungen umfassen,
- die Ausführungsanforderungen gerätespezifische Anforderungen für das Gerät und/oder vorausgesetzte Steuerbefehle umfassen,
- den jeweiligen Steuertransaktionen die entsprechende Ausführungsanforderungen zugeordnet sind.

Die erläuterten Varianten können beispielsweise jeweils auch die bereits erläuterten Module wie das Überprüfungsmodul 320 und/oder das Ausführungsmodul 330 und/oder zweite Speichermodul umfassen.

Die erläuterten blocklosen Varianten können auf analoge Weise auch als Verfahren realisiert werden.

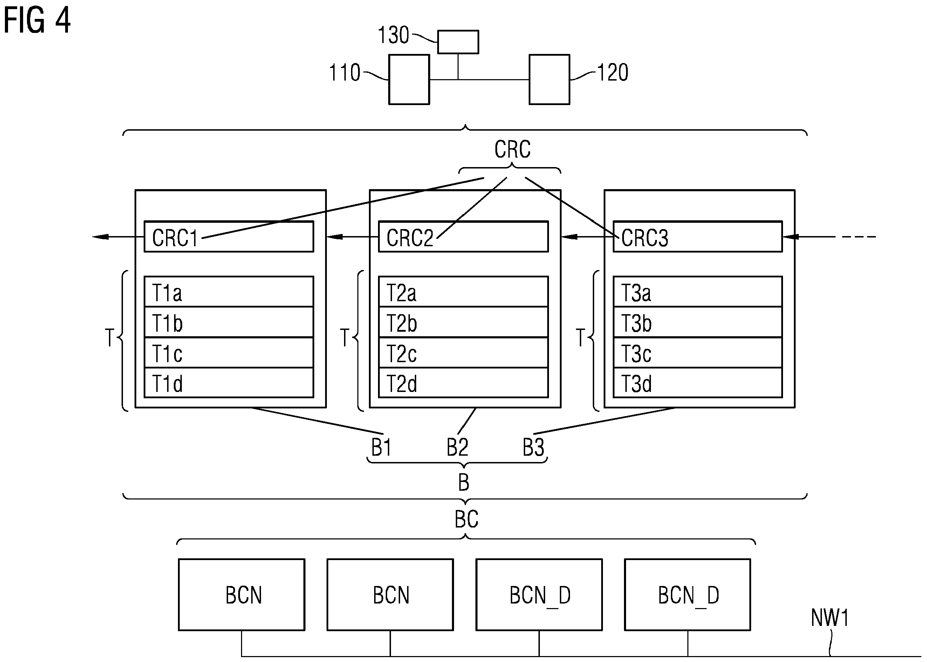

Weist das Gerät 300 beispielsweise das erste Überprüfungsmodul und/oder das erste Ausführungsmodul auf, ist dies dahingehend vorteilhaft, um rechenintensivere Überprüfungsaufgaben durch das Steuersystem (Fig. 1 - 2) oder dem verteilten Datenbanksystem (Fig. 4) ganz oder teilweise auf das Gerät 300 oder mehrere mit dem Gerät 300 gleichartige Geräte auszulagern.

Die Fig. 4 zeigt ein viertes Ausführungsbeispiel der Erfindung als ein verteiltes Datenbanksystem, so wie dieses in der Fig. 1 oder der Fig. 2 mit den zugehörigen Ausführungsbeispielen erläutert wurde.

Das verteilte Datenbanksystem, beispielsweise eine Blockkette BC oder eine Peer-2-Peer Datenbank, umfasst ein erstes Bestimmungsmodul 110, eine Vielzahl von Knoten BCN, BCN_D, ein erstes Zuordnungsmodul 120 und ein erstes Speichermodul 130, die über die Blockketteninfrastruktur kommunikativ miteinander verbunden sind, z. B. indem über das Netzwerk Blöcke der Blockkette für die Knoten repliziert werden. Die Blockketten-infrastruktur kann beispielsweise mittels eines ersten Kommunikationsnetzwerkes NW1 und der Knoten realisiert werden.

Das erste Bestimmungsmodul 110 ist zum Bestimmen von Ausführungsanforderungen für eine Ausführung von Steuerbefehlen durch Geräte eingerichtet, wobei in den Ausführungsanforderungen gerätespezifische Anforderungen und/oder vorausgesetzte Steuerbefehle gespeichert werden.

Die Vielzahl der Knoten und/oder Geräte (siehe vorhergehende Ausführungsbeispiele) sind über das erste Kommunikationsnetzwerk NW1 miteinander verbunden.

Das erste Zuordnungsmodul 120 ist zum Zuordnen der jeweiligen Ausführungsanforderungen zu den Steuerbefehlen eingerichtet.

Das erste Speichermodul 130 ist zum Speichern der jeweiligen Steuerbefehle zusammen mit den entsprechenden Ausführungsanforderungen in Steuertransaktionen eingerichtet, wobei die Steuertransaktionen in Datenblöcken des verteilten Datenbanksystems gespeichert werden und die Steuertransaktionen mittels der Datenblöcke an die Geräte übermittelt werden. Dies erfolgt beispielsweise dadurch, dass über das erste Kommunikationsnetzwerk NW1 für die Knoten die Blöcke der Blockkette oder ein Teil der Blöcke der Blockkette für einen jeweiligen Knoten repliziert werden, sodass ein entsprechender Knoten auf die Transaktionen (z. B. Steuertransaktionen oder Bestätigungstransaktionen) zugreifen kann.

Optional kann das verteilte Datenbanksystem ein erstes Überprüfungsmodul und/oder ein erstes Ausführungsmodul und/oder ein zweites Speichermodul umfassen, die beispielsweise über die Infrastruktur des verteilten Datenbanksystems miteinander und den anderen Modulen kommunikativ in Verbindung stehen. Die Module können beispielsweise auf die gleiche Weise ausgebildet sein, so wie dies in der Fig. 1 und der Fig. 2 mit den dazugehörigen Ausführungsbeispielen erläutert ist.

Beispielsweise können die Geräte ein erstes Geräte-Überprüfungsmodul und/oder ein erstes Geräte-Ausführungsmodul und/oder ein zweites Geräte-Speichermodul umfassen, so wie dies beispielsweise in Fig. 3 erläutert ist. Je nach gewählter Implementierung können das erste Überprüfungsmodul und/oder das erste Ausführungsmodul und/oder ein zweite Speichermodul bei der Realsierung ihrer Funktionalitäten/Aufgaben auf die korrespondierenden Module der Geräte zugreifen.

Dies ist dahingehend vorteilhaft, um rechenintensivere Überprüfungsaufgaben durch das erste Überprüfungsmodul und/oder Ausführungsaufgaben durch das erste Ausführungsmodul ganz oder teilweise auf die entsprechenden Geräte auszulagern.

Weisen die Geräte kein erstes Geräte-Überprüfungsmodul und/oder kein erstes Geräte-Ausführungsmodul und/oder kein zweites Geräte-Speichermodul, so ist dies vorteilhaft, um die Geräte möglichst einfach zu gestalten und das verteilte Datenbanksystem anzubinden.

Die Geräte (auch die Geräte der vorhergehenden Ausführungsbeispiele) beispielsweise können auch als Blockkettenorakel ausgebildet sein. In dem Sicherheitsmodul können beispielsweise kryptographische Schlüssel sicher abgelegt sein, um beispielsweise eine Transaktionsprüfsumme für eine entsprechende Transaktion zu berechnen und in die Blockkette einzustellen bzw. zu speichern.

Auch dieses Ausführungsbeispiel kann in einer Variante (daten)blocklos implementiert/realisiert sein. Hierbei umfasst das verteilte Datenbanksystem folgendes:
- ein erstes Bestimmungsmodul zum Bestimmen von Ausführungsanforderungen für eine Ausführung von Steuerbefehlen durch Geräte, wobei
   - in den Ausführungsanforderungen gerätespezifische Anforderungen und/oder vorausgesetzte Steuerbefehle gespeichert werden;
- eine Vielzahl von Knoten, wobei die Knoten über ein erstes Kommunikationsnetzwerk miteinander verbunden sind;
- ein erstes Zuordnungsmodul zum Zuordnen der jeweiligen Ausführungsanforderungen zu den Steuerbefehlen;
- ein erstes Speichermodul zum Speichern der jeweiligen Steuerbefehle mit den entsprechenden Ausführungsanforderungen in Steuertransaktionen, wobei
   - die Steuertransaktionen mittels des verteilten Datenbanksystems gespeichert werden (also insbesondere indem die Steuertransaktionen mittels oder durch das verteilte Datenbanksystem gespeichert werden oder gespeichert sind);
   - die Steuertransaktionen mittels des verteilten Datenbanksystems an die Geräte übermittelt werden.

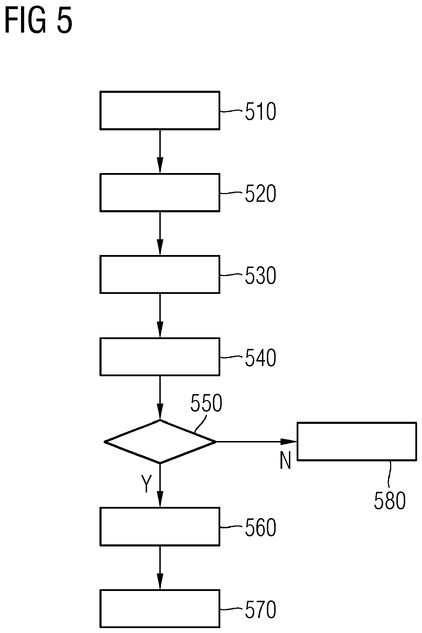

Die Fig. 5 zeigt ein fünftes Ausführungsbeispiel der Erfindung als Ablaufdiagramm des erfindungsgemäßen Verfahrens.

Das Verfahren ist vorzugsweise rechnergestützt realisiert.

Das Ausführungsbeispiel für ein Verfahren zum rechnergestützten Steuern von Geräten kann in einer Variante folgende Verfahrensschritte umfassen:
- Bestimmen von Ausführungsanforderungen für eine Ausführung der Steuerbefehlen durch die Geräte, wobei
   - in den Ausführungsanforderungen entsprechende gerätespezifische Anforderungen und/oder vorausgesetzte Steuerbefehle gespeichert werden;
- Zuordnen der jeweiligen Ausführungsanforderungen zu den Steuerbefehlen;
- Speichern der jeweiligen Steuerbefehle mit den entsprechenden Ausführungsanforderungen in Steuertransaktionen, wobei die Steuertransaktionen in Datenblöcken eines verteilten Datenbanksystems gespeichert werden;
- Übermitteln der Steuertransaktionen mittels der Datenblöcke an die Geräte;
- Überprüfen der jeweiligen Ausführungsanforderungen zum Ausführen der Steuerbefehle einer der Steuertransaktionen durch ein entsprechendes Gerät, wobei
   - die gerätespezifischen Anforderungen für das entsprechende Gerät überprüft werden; und/oder
   - überprüft wird, ob Bestätigungstransaktionen für die vorausgesetzten Steuerbefehle in Datenblöcken des verteilten Datenbanksystems verfügbar sind;
- Ausführen der Steuerbefehle durch das entsprechende Gerät abhängig von einem Ergebnis des Überprüfens;
- Speichern des Ergebnisses des Ausführens der Steuerbefehle in Bestätigungstransaktionen der Datenblöcke des verteilten Datenbanksystems.

Im Einzelnen wird in diesem Ausführungsbeispiel ein Verfahren zum rechnergestützten Steuern von Geräten realisiert.

Das Verfahren umfasst einen ersten Verfahrensschritt zum Bestimmen 510 von Ausführungsanforderungen für eine Ausführung der Steuerbefehle durch die Geräte, wobei in den Ausführungsanforderungen entsprechende gerätespezifischen Anforderungen und/oder vorausgesetzte Steuerbefehle gespeichert werden. Dieser Verfahrensschritt kann zudem noch weitere Merkmale umfassen, die beispielsweise im Zusammenhang mit dem Bestimmungsmodul aus den vorhergehenden Ausführungsbeispielen offenbart wurden.

Das Verfahren umfasst einen zweiten Verfahrensschritt zum Zuordnen 520 der jeweiligen Ausführungsanforderungen zu den Steuerbefehlen.

Das Verfahren umfasst einen dritten Verfahrensschritt zum Speichern 530 der jeweiligen Steuerbefehle mit den entsprechenden Ausführungsanforderungen in Steuertransaktionen, wobei die Steuertransaktionen in Datenblöcken eines verteilten Datenbanksystems gespeichert werden.

Das Verfahren umfasst einen vierten Verfahrensschritt zum Übermitteln 540 der Steuertransaktionen mittels der Datenblöcke an die Geräte. Das Übermitteln erfolgt beispielsweise über das erste Kommunikationsnetzwerk mittels des verteilten Datenbanksystems, so wie dies in den vorherigen Ausführungsbeispielen erläutert wurde.

Das Verfahren umfasst einen fünften Verfahrensschritt zum Überprüfen 550 der jeweiligen Ausführungsanforderungen zum Ausführen von einem der Steuerbefehle oder eines Steuerbefehls oder den Steuerbefehlen einer Steuertransaktion durch ein entsprechendes Gerät, wobei die gerätespezifischen Anforderungen der Steuerbefehle für das entsprechende Gerät überprüft werden und/oder überprüft wird, ob Bestätigungstransaktionen für die vorausgesetzten Steuerbefehle der Steuerbefehle in Datenblöcken des verteilten Datenbanksystems verfügbar sind.

Das Überprüfen ergibt ein Ergebnis, das angibt, ob das entsprechende Gerät die Steuerbefehle ausführen kann Y oder nicht N.

Entsprechend umfasst das Verfahren einen sechsten Verfahrensschritt zum Ausführen 560 der Steuerbefehle durch das entsprechende Gerät abhängig von einem Ergebnis des Überprüfens, wobei die Steuerbefehle der Steuertransaktion ausgeführt werden, wenn dies durch das (Prüf-)Ergebnis erlaubt bzw. bestätigt Y wurde.

Das Verfahren umfasst einen siebten Verfahrensschritt zum Speichern 570 des Ergebnisses des Ausführens der Steuerbefehle in Bestätigungstransaktionen der Datenblöcke des verteilten Datenbanksystems.

Stellt sich beim Überprüfen heraus bzw. gibt das Ergebnis an, dass die Steuerbefehle durch das entsprechende Gerät nicht ausgeführt werden dürfen N, wird ein achter Verfahrensschritt 580 ausgeführt. Dieser kann beispielsweise die Ausführung der Steuerbefehle der Befehlsfolge abbrechen, indem beispielsweise ein Abbruch-Steuerbefehl für die Steuerbefehle der Befehlsfolge in einer Transaktion gespeichert wird, die wiederum in Blöcken der Blockkette gespeichert wird. Alternativ oder zusätzlich können diese oder weitere Steuerbefehle, die aus der Befehlsfolge resultiert sind, ganz oder teilweise abgebrochen werden oder für ungültig erklärt werden. Alternativ oder zusätzlich wird eine Ausführen/Abarbeiten der entsprechenden Steuerbefehle unterbunden.

Alternativ oder zusätzlich kann im achten Verfahrensschritt die Überprüfung neu gestartet werden und das Verfahren springt zu Verfahrensschritt fünf zurück. Auf diese Weise kann beispielsweise ein Warten realisiert werden, bis beispielsweise die Ausführungsanforderungen erfüllt sind. Hierzu kann beispielsweise eine konfigurierbare Zeitverzögerung berücksichtigt werden, die insbesondere angibt wie lange es dauert bis zum fünften Verfahrensschritt zurückgesprungen wird.

Alternativ oder zusätzlich kann das Ergebnis auch im achten Verfahrensschritt in einer Bestätigungstransaktion in der Blockkette gespeichert werden (also in einem Block der Blocckette) .

Die einzelnen Verfahrensschritte können - so wie dies in den vorhergehenden Ausführungsbeispielen erläutert wurde - durch unterschiedliche Komponenten des Steuersystems realisiert werden. Dies sind beispielsweise das verteilte Datenbanksystem selbst und/oder die Geräte und/oder Knoten des verteilten Datenbanksystems.

Mittels der Erfindung (aus diesem Ausführungsbeispiel oder den vorhergehenden), lässt sich auf einfache Weise eine Befehlsfolge in Steuerbefehle bzw. Steuertransaktionen zerlegen, die dann durch entsprechend geeignete Geräte abgearbeitet werden. Dies wird sichergestellt durch die hohe Datenintegrität, die beispielsweise durch eine Blockkette erreicht wird (z. B. um einen Manipulationsschutz der abzuarbeitenden Steuerbefehle in den Steuertransaktionen zu erreichen). Dadurch, dass das Ergebnis der Abarbeitung der Steuerbefehle bzw. Steuertransaktionen in Bestätigungstransaktionen gespeichert wird, können die Geräte mit der Erfindung auch überwacht werden. Dabei können die Bestätigungstransaktionen auch Einzelheiten der Abarbeitung der Steuertransaktionen/Steuerbefehle umfassen. Dies sind z. B. Fertigungszeit oder Fertigungsprobleme, die bei dem Abarbeiten (z. B. der Fertigung eines Produktes) aufgetreten sind. Insofern kann eine Bestätigungstransaktion auch eine Information umfassen, dass die Abarbeitung der Steuerbefehle nicht erfolgreich war. Handelt es sich bei diesen nicht erfolgreich ausgeführten Steuerbefehlen um vorausgesetzte Steuerbefehle für andere/weitere Steuerbefehle, so würde insbesondere das Ergebnis des Überprüfens der Ausführungsanforderungen für diese anderen/weiteren Steuerbefehle ergeben, dass diese anderen/weiteren Steuerbefehle durch ein/das entsprechendes Gerät nicht ausgeführt werden dürfen.

Sind jedoch die Ausführungsanforderungen für die anderen/weiteren Steuerbefehle erfüllt, so werden diese durch ein entsprechendes Gerät ausgeführt.

Die Verfahrensschritte vier bis sieben (540 - 570) können je nach Implementierungsvariante optionale Verfahrensschritte sein.

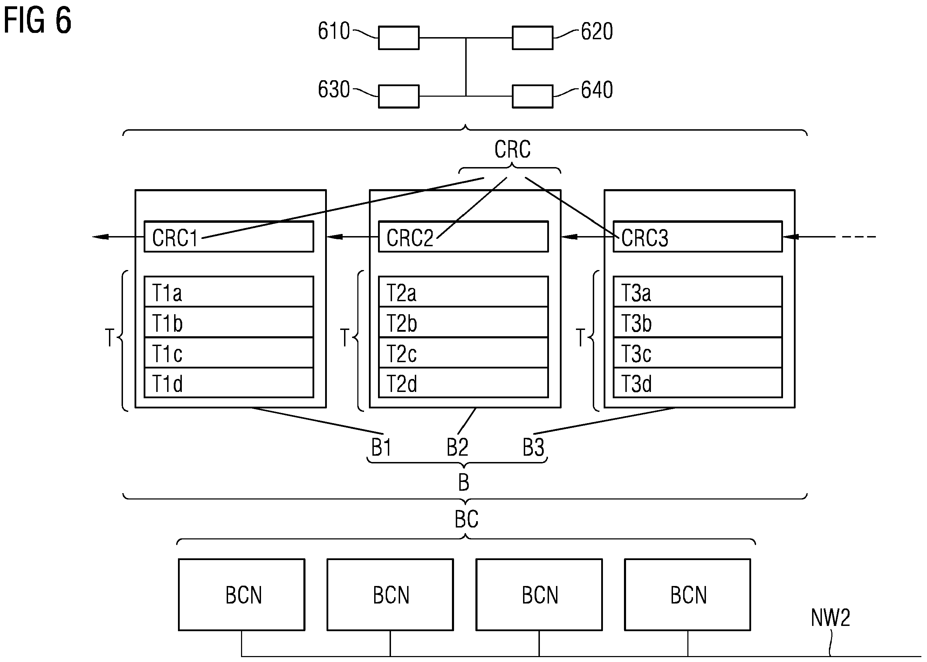

Die Fig. 6 zeigt ein weiteres Ausführungsbeispiel der Erfindung.

Im Einzelnen zeigt die Fig. 6 ein verteiltes Datenbanksystem (oder nur kurz verteilte Datenbank genannt), beispielsweise eine Blockkette BC, das vorzugsweise nur für eine spezifische Anwendung verwendet wird. Beispielsweis kann das erste verteilte Datenbanksystem das verteilte Datenbanksystem aus den vorherigen Ausführungsbeispielen sein bzw. eine Kombination hiervon, um beispielsweise ein anwendungsspezifisches Datenbanksystem zu schaffen, das insbesondere für die Abarbeitung der dort genannten Befehlsfolgen verwendet wird.

Im Einzelnen zeigt die Fig. 6 Blöcke B, beispielsweise einen ersten Block B1, einen zweiten Block B2 und einen dritten Block B3, der Blockkette BC.

Die Blöcke B umfassen jeweils mehrere Transaktionen T. Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten Vorgänger-Block gebildet wird. Somit umfasst der erste Block B1 eine erste Verkettungsprüfsumme CRC1 von seinem Vorgänger-Block, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen Hash-Funktion wie z.B. SHA-256, KECCAK-256 oder SHA-3 gebildet werden. Beispielsweise kann die Verkettungsprüfsumme zusätzlich über die Datenblockprüfsumme berechnet werden oder der Header umfasst die Datenblockprüfsumme.

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen.

Die Blockkette selbst wird durch eine Blockketten-Infrastruktur mit mehreren Blockketten-Knoten realisiert.

Die verteilte Datenbank, die mittels der Blockkette BC realisiert ist, umfasst zudem noch eine Vielzahl von Knoten BCN, ein drittes Speichermodul 610, zweites Zuordnungsmodul 620, drittes Zuordnungsmodul 630 und ein zweites Überprüfungsmodul 640 umfasst, die über die Infrastruktur des ersten verteilten Datenbanksystems miteinander kommunikativ in Verbindung stehen.

Das verteilte Datenbanksystem ist dabei zum Bereitstellen und/oder Speichern von Transaktionen und/oder Datenblöcken geeignet.

Die Vielzahl von Knoten BCN sind über ein zweites Kommunikationsnetzwerk NW2 (auch als Kommunikationsnetzwerk oder weiteres Kommunikationsnetzwerk bezeichenbar) miteinander verbunden. Diese bilden zumindest einen Teil oder vollständig die Infrastruktur des ersten verteilten Datenbanksystems. Bei dem zweiten Kommunikationsnetzwerk kann es sich beispielsweise auch um das erste Kommunikationsnetzwerk aus den vorherigen Ausführungsbeispielen handeln.

Das dritte Speichermodul 610 ist zum Speichern von (bzw. der) Transaktionen in dem verteilten Datenbanksystem eingerichtet (z. B. werden/sind diese Transaktionen in Datenblöcken des verteilten Datenbanksystems gespeichert). Mit anderen Worten werden/sind die entsprechenden Transaktionen mittels des verteilten Datenbanksystems oder durch das verteilte Datenbanksystem gespeichert (z. B. mittels der Datenblöcke). Mit anderen Worten werden/sind diese Transaktionen durch das verteilte Datenbanksystem gespeichert.

Das zweite Zuordnungsmodul 620 ist zum Zuordnen eines Aufgabendatensatzes einer spezifischen Aufgabe zu dem verteilten Datenbanksystem eingerichtet, wobei insbesondere die Transaktionen Daten zum Durchführen der spezifischen Aufgabe umfassen. Im Einzelnen umfasst dabei insbesondere der Aufgabendatensatz die spezifische Aufgabe.

Das zweite Zuordnungsmodul 620 kann beispielsweise auch als ein (viertes) Speichermodul ausgebildet sein, das dazu eingerichtet ist den Aufgabendatensatz zu speichern. Zusätzlich oder alternativ ist das vierte Speichermodul dazu eingerichtet dem verteilten Datenbanksystem den Aufgabendatensatz zuzuordnen. Im Einzelnen umfasst dabei insbesondere der Aufgabendatensatz die spezifische Aufgabe.

Mit anderen Worten kann das zweite Zuordnungsmodul beispielsweise als ein viertes Speichmodul zum Speichern eines Aufgabendatensatzes (mit) einer spezifischen Aufgabe eingerichtet oder ausgebildet sein, wobei
- insbesondere dem verteilten Datenbanksystem der Aufgabendatensatz zugeordnet ist (und/oder wird) und
- insbesondere die Transaktionen Daten zum Durchführen der spezifischen Aufgabe umfassen.

Das dritte Zuordnungsmodul 630 ist zum Zuordnen eines Gültigkeitsdatensatzes für das verteilte Datenbanksystem eingerichtet, wobei der Gültigkeitsdatensatz eine Gültigkeit für vorgegebene Funktionen des verteilten Datenbanksystems angibt. Im Einzelnen umfasst dabei insbesondere der Gültigkeitsdatensatz die Gültigkeit für die entsprechenden vorgegebenen Funktionen (was z. B. auch eine einzelne Funktion oder eine Auswahl von Funktionen sein kann) des verteilten Datenbanksystems.

Das dritte Zuordnungsmodul 630 kann beispielsweise auch als ein (fünftes) Speichermodul ausgebildet sein, das dazu eingerichtet ist den Gültigkeitsdatensatz zu speichern. Zusätzlich oder alternativ ist das fünfte Speichermodul dazu eingerichtet dem verteilten Datenbanksystem den Gültigkeitsdatensatz zuzuordnen. Im Einzelnen umfasst dabei insbesondere der Gültigkeitsdatensatz die Gültigkeit für die entsprechenden vorgegebenen Funktionen (was z. B. auch eine einzelne Funktion oder eine Auswahl von Funktionen sein kann) des verteilten Datenbanksystems.

Mit anderen Worten kann das dritte Zuordnungsmodul 630 beispielsweise als ein fünftes Speichmodul zum Speichern (oder Zuordnen) eines Gültigkeitsdatensatz eingerichtet oder ausgebildet sein, wobei
- insbesondere dem verteilten Datenbanksystem der Gültigkeitsdatensatz zugeordnet ist (und/oder wird) und
- insbesondere der Gültigkeitsdatensatz eine Gültigkeit für vorgegebene Funktionen des verteilten Datenbanksystems angibt (oder umfasst).

Es ist beispielsweise auch möglich, dass die entsprechenden Zuordnungsmodule jeweils ein entsprechendes Speichermodul (z. B. das vierte Speichermodul oder das fünfte Speichermodul) umfassen.

Der Gültigkeitsdatensatz kann beispielsweise einen Zeitraum und/oder einen Zeitpunkt und/oder ein Ereignis angeben, bis zu dem eine der Funktionen oder alle Funktionen ausgeführt werden können.

Alternativ oder zusätzlich wird ein Ablaufen der Gültigkeit (die in dem Gültigkeitsdatensatzgespeichert ist) ein Zeitpunkt oder Gültigkeitszeitraum festgelegt, der durch einen Austausch eines Gerät oder Feldgerät bestimmt wird. Beispielsweise ist das erste verteilte Datenbanksystem für eine Überwachung eines bestimmten Gerätes erzeugt worden. In diesem Fall ist die Aufgabe das Überwachen des entsprechenden Gerätes und die Gültigkeit ist der Nutzungszeitraum beginnend mit dem erstmaligen Einschalten des Gerätes bis zum Ersetzen des Gerätes durch ein anderes Gerät oder dem Ausbau des Gerätes.

Alternativ oder zusätzlich ist das Ereignis das Erfüllen der spezifischen Aufgabe.

Alternativ oder zusätzlich ist der Zeitraum eine Lebensdauer eines Gerätes oder Feldgerätes.

Alternativ oder zusätzlich ist der Zeitraum eine Durchführungszeit einer Befehlsfolge und/oder einer Wartungsaktion und/oder einer Steuerungsaktion eines Gerätes oder Feldgerätes. Die entsprechenden Geräte (auch die Geräte der vorhergehenden Ausführungsbeispiele) oder Feldgeräte können beispielsweise über Sicherheitsmodule verfügen, um die entsprechenden Transkationen in das verteilte Datenbanksystem bzw. die Blockkette einzustellen, indem diese beispielsweise als Blockkettenorakel ausgebildet sind. Die entsprechenden Geräte (auch die Geräte der vorhergehenden Ausführungsbeispiele) können beispielsweise auch als Blockkettenorakel ausgebildet sein. In dem Sicherheitsmodul können beispielsweise kryptographische Schlüssel sicher abgelegt sein, um beispielsweise eine Transaktionsprüfsumme für eine entsprechende Transaktion zu berechnen und in die Blockkette einzustellen bzw. zu speichern.

Das Speichern des Aufgabendatensatzes und/oder des Gültigkeitsdatensatzes kann dabei auf unterschiedliche Weise realisiert werden. Beispielsweise kann der jeweilige Datensatz in einer Transaktion des verteilten Datenbanksystems gespeichert werden. Diese Transaktion kann z. B. in einem Datenblock des verteilten Datenbanksystems gespeichert werden, dies kann insbesondere der erste Datenblock (auch z. B. Genesis-Block bei Bitcoin genannt)

Das zweite Überprüfungsmodul 640 ist zum Überprüfen der Gültigkeit für vorgegebene Funktionen eingerichtet. Beispielsweise gibt die Gültigkeit an, dass ab einem bestimmten Zeitpunkt oder ab dem Erfüllen einer bestimmten Bedingung (z. B. Gerät wurde gegen ein neues Gerät ausgetauscht, Garantiezeit ist abgelaufen) keine neuen der vorgegebenen Funktionen mehr ausgeführt werden können. Die vorgegebenen Funktionen können beispielsweise sein, dass Blöcke zu der Blockkette hinzugefügt werden können und/oder Transaktionen ausgeführt werden und/oder Smart-Contracts in den Transaktionen (in den Blöcken der Blockkette) ausgeführt werden. Dabei ist bis zum Ablauf der Gültigkeit beispielsweise die spezifische Aufgabe, das Gerät zu überwachen und die an das Gerät übermittelten Transaktionen und Befehle zu protokollieren und/oder die Aktionen und/oder Ausgaben des entsprechenden Gerätes zu überwachen. Dazu werden die dafür notwendigen Informationen entweder durch das Gerät selbst oder durch ein Überwachungsgerät (z. B. eine Firewall, die den Netzwerkverkehr überwacht) in die Blockkette geschrieben.

Ist die Gültigkeit für die Blockkette abgelaufen, unterbindet beispielsweise das zweite Überprüfungsmodul 640 eine Ausführung der vorgegebenen Funktionen, für welche die Gültigkeit abgelaufen ist.

Mit der Erfindung wird insbesondere das Problem von konventionellen Blockketten gelöst, dass Informationen, die einmal in der Blockkette gespeichert wurden, aus dieser nicht mehr zu entfernen sind, obwohl diese Information nur für einen begrenzten Zeitraum (z. B. für die Lebensdauer eines Gerätes und/oder deren Garantiezeitraum) bereitgestellt werden muss.

Dieses Problem kann im Fin-Tech Bereich nicht zwangsläufig ein Nachteil sein, jedoch im Internet der Dinge und bei einer Gerätesteuerung auf Basis von Blockketten ist es wünschenswert eine Blockkette nur für eine solche spezifische Aufgabe zu nutzen (z. B. eine Herstellung eines Produktes, eine Steuerung einer Kraftwerksanlage für einen bestimmte Zeitraum) und/oder diese Daten nur für eine bestimmte Zeit vorzuhalten (z. B. bis zum Garantieablauf oder bis zur gesetzlichen Mindestaufbewahrungsfrist).

Die erfinderische Idee besteht insbesondere darin, einer spezifischen Blockkette für eine spezifische Aufgabe vorgegebene Gültigkeitseigenschaften - oder nur Gültigkeit genannt - (z. B. mittels des Gültigkeitsdatensatzes) zuzuordnen. Diese Gültigkeit, die vorzugsweise in dem Gültigkeitsdatensatz gespeichert ist, legt beispielsweise einen bestimmten Lebenszyklus oder Gültigkeitszeitraum für die Blockkette fest. Der Beginn der Gültigkeit kann durch einen ersten Trigger zur Erzeugung der Blockkette gestartet werden (z. B. der Startbefehl einer Befehlsfolge zum Steuern eine Kraftwerksanlage) und die Gültigkeit wird durch einen zweiten Trigger beendet, wenn z. B. der letzte Befehl einer Befehlsfolge abgearbeitet wurde. Alternativ kann der erste Trigger das erstmalige Starten eines bestimmten Gerätes sein, dem die Blockkette zugeordnet ist bzw. die Blockkette (oder das erste verteilte Datenbanksystem), die spezifische für das bestimmte Gerät erzeugt wurde. Der zweite Trigger kann dann dadurch realisiert sein, wenn das bestimmte Gerät gegen ein anderes Gerät ausgetauscht wird. Das bestimmte Gerät und das Austauschgerät sind dabei insbesondere Geräte eines komplexen technischen Systems.

Die Befehlsfolge kann hierbei an eine Vielzahl von Geräten in einem Energieversorgungsnetz gerichtet sein (so wie dies in den vorherigen Ausführungsbeispielen erläutert wurde) und wenn alle Geräte ihre Befehle abgearbeitet haben endet der Lebenszyklus der Blockkette.

Wenn die Gültigkeit für die Blockkette erloschen ist bzw. die Gültigkeit nicht mehr gegeben ist, kann die Blockkette in eine andere Datenbank (z. B. eine andere Blockkette oder ein hierarchische Datenbanksystem) geschrieben werden. Hierbei muss gar nicht die gesamte spezifische Blockkette in die andere Datenbank geschrieben werden, sondern es ist ausreichend eine Referenz auf den letzten Block der (spezifischen) Blocckette und/oder den entsprechende Hashwert des (letzten) Blocks und/oder ein Speicherort der Blockkette in der anderen Datenbank zu speichern. Insbesondere kann das erste Datenbanksystem eine andere Implementierung haben als das andere/zweite verteilte Datenbanksystem. Beispielsweise ist das erste Datenbanksystem als Blockkette realisiert und das zweite Datenbanksystem als hierarchische Datenbank realisiert (z. B. in SQL).

Es sind hierbei unterschiedliche Erweiterungen denkbar: Beispielsweise kann mit dem Ablaufen der Gültigkeit der spezifische Blockkette die Blockkette versiegelt werden (z. B. via eines Smart Contracts), sodass keine neuen Glieder mehr hinzugefügt werden können. Dies kann beispielsweise auch mittels des zweiten Überprüfungsmoduls 640 erfolgen, das beispielsweise als Smart-Contract der Blockkette realisiert ist und in einer Transaktion gespeichert ist, die wiederum in einem Block der Blockkette gespeichert ist.

Der Gültigkeitsdatensatz bzw. die Gültigkeit kann beispielsweise ein Ablaufdatum für die Blockkette umfassen. Die Blocckette wird insbesondere nach dem Ablauf dieses Datums vom Speicherort automatisiert gelöscht. Dies kann beispielsweise auch mittels des zweiten Überprüfungsmoduls 640 erfolgen, das beispielsweise als Smart-Contract der Blockkette realisiert ist und in einer Transaktion gespeichert ist, die wiederum in einem Block der Blockkette gespeichert ist.

Auch können beispielsweise der erste Trigger und/oder der zweite Trigger als Smart-Contract realisiert sein, die beispielsweise eine aufgabenspezifische Blockkette erzeugen oder überprüfen, wann beispielsweise die Aufgabe erfüllt und/oder die Gültigkeit erloschen ist.

Mit der Erfindung lässt sich das erste verteilte Datenbanksystem beispielsweise nach Ablauf der Gültigkeit als eine "Read Only" (nur lesend verwendbare) verteilte Datenbank nutzen. Hierbei werden ggf. noch als Funktion lesende Zugriffe erlaubt jedoch schreibende unterbunden. Dies kann beispielsweise durch die Gültigkeit bzw. dem Gültigkeitsdatensatz festlegt sein.

Auch kann das erste verteilte Datenbanksystem noch ein optionales Registrierungsmodul umfassen.

Das Registrierungsmodul kann beispielsweise als Software- und/oder Hardwarekomponente ausgebildet sein - analog zum ersten Bestimmungsmodul 110 aus Fig. 1 (z. B. als Smart-Contract der Blockkette oder als vertrauenswürdige Knoten der Blockkette). Das Registrierungsmodul kann insbesondere durch die Blockkette bzw. einen Smart-Contract realisiert werden oder ist eine Softwarekomponente der Blockketten-Infrastruktur. Alternativ kann das Registrierungsmodul als spezifischer vertrauenswürdiger Knoten realisiert sein, dessen Netzwerkadresse beispielsweise öffentlich bekannt ist. Handelt es sich beispielsweise um ein geschlossenes verteiltes Datenbanksystem, bei dem nur berechtigte Knoten und/oder Geräte an das Steuersystem bzw. dem verteilten Datenbanksystem angebunden werden, so ist insbesondere ausschließlich die Netzwerkadresse des Registrierungsmoduls öffentlich bekannt.

Das Registrierungsmodul ist dazu eingerichtet neue Knoten und/oder Geräte dem ersten verteilten Datenbanksystem hinzuzufügen. Sobald ein neues Gerät und/oder Knoten dem ersten verteilten Datenbanksystem beitreten möchte, wird durch das neue Gerät oder durch den neuen Knoten eine Anfrage an das Registrierungsmodul gesendet. Dies kann direkt erfolgen, indem beispielsweise Knoten- und/oder Geräteinformationen direkt an das Registrierungsmodul übermittelt werden. Erfolgt dies indirekt wird die Anfrage zwischen den Knoten und Modulen des ersten verteilten Datenbanksystems weitergeleitet bis die Anfrage das Registrierungsmodul erreicht.

Die Knoten- und/oder Geräteinformationen können dabei folgendes umfassen:
- Geräteadresse/Knotenadresse
- Betreiber des Gerätes/Knotens
- Funktionsumfang des Gerätes/Knotens
- kryptographische Schlüssel (z. B. zum Überprüfen von Prüfsummen/digitalen Signaturen, die durch das Gerät/den Knoten erzeugt wurden)
- weitere Eigenschaften, die bei der Überprüfung der Ausführungsanforderungen benötigt werden

Die Knoten- und/oder Geräteinformationen können dann beispielsweise im ersten verteilten Datenbanksystem (z. B. in entsprechenden Tabellen) gespeichert werden, damit beispielsweise das Überprüfen und/oder das Ausführen der Steuerbefehle bzw. Steuertransaktionen durch die entsprechenden Module realisiert werden kann (siehe Fig. 1).

Handelt es sich bei dem ersten verteilten Datenbanksystem beispielsweise um ein geschlossenes verteiltes Datenbanksystem, überprüft das Registrierungsmodul auch, ob das Gerät/der Knoten zugangsberechtigt ist - also ob insbesondere das Gerät/der Knoten als Teil des ersten verteilten Datenbanksystems akzeptiert ist/wird. Hierfür stellt das Gerät/der Knoten beispielsweise Authentifizierungsinformationen (kryptographische Schlüssel, Passwörter, usw.) bereit, die durch das Registrierungsmodul überprüft werden.

Handelt es sich bei dem Datenbanksystem beispielsweise um ein offenes verteiltes Datenbanksystem, so werden beispielsweise die Knoten- und/oder Geräteinformationen erfasst.

Die Module können beispielsweise als Software- und/oder Hardwarekomponente ausgebildet sein - analog zum ersten Bestimmungsmodul 110 aus Fig. 1 (z. B. als Smart-Contract der Blockkette oder als vertrauenswürdige Knoten der Blockkette). Die Module können insbesondere durch die Blockkette bzw. einem Smart-Contract realisiert werden oder sind eine Softwarekomponente der Blockketten-Infrastruktur.

Mit der Erfindung können auf einfache Weise komplexe Steuerbefehlsketten in einer Blockkette für eine spezifische Aufgabe zur Steuerung von Geräten verwaltet werden. Insbesondere erlaubt die Erfindung für eine spezifische Aufgabe einer blockkettenbasierten Gerätesteuerung eine vorgegebene Gültigkeit zuzuordnen, wobei die Gültigkeit beispielsweise durch den Lebenszyklus (z. B. die Nutzungsdauer) eines Gerätes definiert ist.

Insbesondere kann mittels des ersten verteilten Datenbanksystems beispielsweise auch ein digitaler Zwilling (z. B. in Form einer Blockkette) realisiert werden bzw. das erste verteilte Datenbanksystem ist ein digitaler Zwilling.

Der digitale Zwilling wird dabei beispielsweise für ein erstes verteiltes Datenbanksystem oder ein zu fertigendes Produkt (z. B. das Gerät aus Fig. 3 oder ein anderes Produkt) realisiert (bzw. berechnet oder erzeugt). Dabei kann das erste verteilte Datenbanksystem beispielsweise mittels einer UID (oder eine andere Form eines eindeutigen Identifizierers) eines Gerätes dem ersten verteilten Datenbanksystem zugeordnet werden (z. B. durch ein Speichern der entsprechenden UID im Aufgabendatensatz bzw. der spezifischen Aufgabe). Das erste verteilte Datenbanksystem kann beispielsweise das verteilte Datenbanksystem aus einem der Ansprüche 1-15 sein.

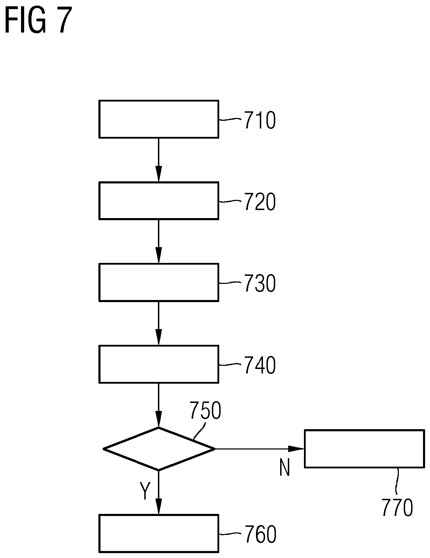

Die Fig. 7 zeigt ein siebtes Ausführungsbeispiel der Erfindung als Ablaufdiagramm eines erfindungsgemäßen Verfahrens.

Das Verfahren ist vorzugsweise rechnergestützt realisiert.

Im Einzelnen wird in diesem Ausführungsbeispiel ein Verfahren zum rechnergestützten Bereitstellen von Transaktionen realisiert.

Das Verfahren umfasst einen ersten Verfahrensschritt zum Speichern 710 von Daten in Transaktionen, wobei die Transaktionen in einem ersten verteilten Datenbanksystems gespeichert sind und/oder werden (z. B. werden/sind diese Transaktionen in Datenblöcken des verteilten Datenbanksystems gespeichert). Mit anderen Worten werden die entsprechenden Transaktionen mittels des verteilten Datenbanksystems oder durch das verteilte Datenbanksystem gespeichert (z. B. mittels der Datenblöcke).

Das Verfahren umfasst einen zweiten Verfahrensschritt 720 zum Zuordnen eines Aufgabendatensatzes einer spezifischen Aufgabe zu dem verteilten Datenbanksystem, wobei die Transaktionen Daten zum Durchführen der spezifischen Aufgabe umfassen. Im Einzelnen umfasst dabei insbesondere der Aufgabendatensatz die spezifische Aufgabe.

Der zweite Verfahrensschritt 720 kann insbesondere entsprechend der nachfolgend genannten unterschiedlichen Varianten ausgebildet oder implementiert sein.

Insbesondere kann der zweite Verfahrensschritt 720 beispielsweise auch als ein Verfahrensschritt zum Speichern eines Aufgabendatensatzes mit einer spezifischen Aufgabe ausgebildet/implementiert sein. Zusätzlich oder alternativ kann im zweiten Verfahrensschritt 720 dem verteilten Datenbanksystem der Aufgabendatensatz zugeordnet werden. Im Einzelnen umfasst dabei insbesondere der Aufgabendatensatz die spezifische Aufgabe.

Mit anderen Worten kann es sich bei dem zweiten Verfahrensschritt 720 beispielsweise um einen Verfahrensschritt zum Speichern eines Aufgabendatensatzes mit einer spezifischen Aufgabe handeln (oder z. B. um einen Verfahrensschritt handeln, der entsprechend ausgebildet/implementiert ist), wobei
- insbesondere dem verteilten Datenbanksystem der Aufgabendatensatz zugeordnet ist (und/oder wird) und
- insbesondere die Transaktionen Daten zum Durchführen der spezifischen Aufgabe umfassen.

Bei den Daten kann es sich beispielsweise um Steuerbefehle oder Gerätedaten (z. B. Bestätigungstransaktionen) handeln, so wie dies in den vorherigen Ausführungsbeispielen erläutert wurde.

Das Verfahren umfasst einen dritten Verfahrensschritt 730 zum Zuordnen eines Gültigkeitsdatensatzes für das verteilte Datenbanksystem, wobei der Gültigkeitsdatensatz eine Gültigkeit für vorgegebene Funktionen des ersten verteilten Datenbanksystems angibt. Im Einzelnen umfasst dabei insbesondere der Gültigkeitsdatensatz die Gültigkeit für die entsprechenden vorgegebenen Funktionen (was z. B. auch eine einzelne Funktion oder eine Auswahl von Funktionen sein kann) des verteilten Datenbanksystems.

Der dritte Verfahrensschritt 730 kann insbesondere entsprechend der nachfolgend genannten unterschiedlichen Varianten ausgebildet oder implementiert sein.

Insbesondere kann der dritte Verfahrensschritt 730 beispielsweise auch als ein Verfahrensschritt zum Speichern des Gültigkeitsdatensatzes ausgebildet sein. Zusätzlich oder alternativ kann im dritten Verfahrensschritt 730 dem verteilten Datenbanksystem der Gültigkeitsdatensatz zugeordnet werden. Im Einzelnen umfasst dabei insbesondere der Gültigkeitsdatensatz die (entsprechende) Gültigkeit für die (entsprechenden) vorgegebenen Funktionen (was z. B. auch eine einzelne Funktion oder eine Auswahl von Funktionen sein kann) des verteilten Datenbanksystems.

Mit anderen Worten kann es sich bei dem dritten Verfahrensschritt 730 beispielsweise um einen Verfahrensschritt zum Speichern eines Gültigkeitsdatensatz mit einer spezifischen Aufgabe handeln, wobei
- insbesondere dem verteilten Datenbanksystem der Gültigkeitsdatensatz zugeordnet ist (und/oder wird) und
- insbesondere der Gültigkeitsdatensatz eine Gültigkeit für vorgegebene Funktionen des verteilten Datenbanksystems angibt (oder umfasst).
Das Verfahren umfasst einen vierten Verfahrensschritt 740 zum Überprüfen der Gültigkeit des ersten verteilten Datenbanksystems und/oder der vorgegebenen Funktionen.

Abhängig vom Ergebnis dieses Überprüfens kann in einem Verfahrensschritt 750 entschieden werden, ob nun eine Funktion ausgeführt wird oder nicht.

Ist das Ergebnis, dass das erste verteilte Datenbanksystem oder die vorgegebene Funktion noch gültig Y ist, so wird die entsprechende Funktion (z. B. Einfügen einer Transaktion in das erste verteilte Datenbanksystem) in einem fünften Verfahrensschritt 760 durch das erste verteilte Datenbanksystem ausgeführt.

Ist das Ergebnis, dass das erste versteilte Datenbanksystem oder die vorgegebene Funktion nicht gültig N ist, so wird die entsprechende Funktion in einem sechsten Verfahrensschritt 760 durch die das erste verteilte Datenbanksystem unterbunden und nicht ausgeführt.

Die Fig. 8 zeigt ein achtes Ausführungsbeispiel der Erfindung als Bestimmungsmodul 110.

Das Bestimmungsmodul 110 ist für ein verteiltes Datenbanksystem oder für ein Steuersystem mit einem verteilten Datenbanksystem zum Steuern und/oder Überwachen von Geräten oder für Geräte geeignet, die Steuerbefehle (z. B. im Form von Transaktionen) ausführen.

Das Bestimmungsmodul 110 umfasst eine erste Schnittstelle 810, eine erste Evaluierungseinheit 820 und optional einen Konfigurationsspeicher 830, die über einen Bus 901 vorzugsweise miteinander kommunikativ in Verbindung stehen. Ein Bus kann hierbei z. B. auch ein einfacher Programmfluss oder ein Datenaustausch zwischen den entsprechenden Komponenten sein.

Das Bestimmungsmodul kann beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können. Die weitere/n Komponente/n können beispielsweise ebenfalls über den Bus miteinander kommunikativ verbunden sein.

Bei dem Prozessor kann es sich beispielsweise um einen ASIC handeln, der anwendungsspezifisch für die Funktionen eines jeweiligen Moduls (oder einer Einheit) oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Die erste Schnittstelle 810 ist zum Empfangen oder Abrufen von Steuerbefehlen eingerichtet. Die Steuerbefehle können dabei z. B. von einem Nutzer mittels einer GUI an die erste Schnittstelle 810 übermittelt werden. Die Steuerbefehle können aber auch durch einen Server oder eine andere Datenbank bereitgestellt werden. Dies kann beispielsweise wieder ein verteiltes Datenbanksystem sein oder eine hierarchische Datenbank sein. Sollte das Bestimmungsmodul beispielsweise in einem erfindungsgemäßen Steuersystem eingesetzt werden, so können die Steuerbefehle oder eine Befehlsfolge dem Steuersystem auf die gleiche Weise übermittelt werden, so wie dies in diesem Ausführungsbeispiel beschrieben wird.

Die Steuerbefehle können beispielsweise auch von einem Zerlegemodul, so wie es in den vorhergehenden Ausführungsbeispielen erläutert wurde, bereitgestellt werden. Das Zerlegemodul empfängt oder ruft hierzu die Steuerbefehle oder Befehlsfolgen ab.

Die Steuerbefehle oder Befehlsfolgen können dabei z. B. von einem Nutzer mittels einer GUI und beispielsweise über eine zweite Schnittstelle oder die erste Schnittstelle 810, an das erste Zerlegemodul übermittelt werden. Die Steuerbefehle oder die Befehlsfolgen können aber auch durch einen Server oder eine andere Datenbank dem Zerlegemodul bereitgestellt werden. Dies kann beispielsweise wieder ein verteiltes Datenbanksystem sein oder eine hierarchische Datenbank sein.

Die erste Evaluierungseinheit 820 ist zum Bestimmen von Ausführungsanforderungen für eine Ausführung von Steuerbefehle durch Knoten eines/des verteilten Datenbanksystems oder durch Geräte, die z. B. mittels eines verteilten Datenbanksystems verbunden sind, eingerichtet, wobei
- die Ausführungsanforderungen anhand von gerätespezifischen Anforderungen und/oder vorausgesetzte Steuerbefehle bestimmt werden,
- in den Ausführungsanforderungen z. B. die gerätespezifische Anforderungen und/oder die vorausgesetzte Steuerbefehle gespeichert sind;
- das verteilte Datenbanksystem beispielsweise eine Blocckette ist.

Der Konfigurationsspeicher umfasst die gerätespezifischen Daten über die Geräte und/oder gerätespezifische Daten über die Knoten und/oder die gerätespezifische Anforderungen.

Das Bestimmungsmodul ist dahingehend vorteilhaft, um insbesondere die Ausführung von Steuerbefehlen von Geräten oder Knoten (z. B. Fertigungsroboter, Steuersysteme für ein Energieverteilungsnetzwerk, Bankterminals, Geldautomaten, Transfers zwischen Banken) zu verbessern, die über ein Netzwerk miteinander verbunden sind.

Das Bestimmungsmodul kann auch beispielsweise die Steuerbefehle spezifischen Geräten zuordnen, die diese Ausführen sollen. Dies wird vorzugsweise in den Ausführungsanforderungen gespeichert.

Zusätzlich kann beispielsweise die Sicherheit beim Betreiben einer verteilten Infrastruktur (z. B. ein verteiltes Datenbanksystem mit Geräten und/oder Knoten oder Knoten/Geräte die auf das verteilte Datenbanksystem zugreifen) erhöht werden, die ganz oder teilweise mittels eines verteilten Datenbanksystems (z. B. einer Blockkette) implementiert ist.

Insbesondere ist der Begriff Steuerbefehle breit zu verstehen. Hierbei kann es sich beispielsweise zusätzlich zu der oben genannten Definition auch um Transaktionen handeln, die durch ein Gerät (z. B. einen Knoten einer Blockkette oder ein Gerät außerhalb der Blockkette, z. B. Gerät D) ausgeführt werden sollen. Mit anderen Worten werden durch die Vorrichtung insbesondere ungeprüfte Transaktionen in geprüfte Transaktionen konvertiert, wobei die Prüfung beispielsweise anhand der gerätespezifischen Anforderungen und gerätespezifischen Daten erfolgt, welche die Steuerbefehle ausführen sollen.

Mittels der Erfindung können beispielsweise geforderte gerätespezifische Anforderungen für die Ausführung der Steuerbefehle am Gerät sichergestellt bzw. überprüft werden. Dabei können die gerätespezifischen Anforderungen beispielsweise auch Sicherheitsanforderungen und/oder ortsbezogene Anforderungen (z. B. eine Länderangabe, eine GPS-Angabe oder PLZ) sein, die ein Gerät für die Ausführung der Steuerbefehle erfüllen soll. Oder es kann beispielsweise noch eine bestimmte/vorgegebene Authentisierung und/oder Authentifizierung durch die gerätespezifischen Anforderungen für die Ausführung gefordert werden.

Die gerätespezifischen Anforderungen für Knoten oder Geräte können beispielsweise auch nutzerbezogen sein oder nutzerspezifische Anforderungen umfassen. Beispielsweise kann ein erster Nutzer in den ihm zugeordneten gerätespezifischen Anforderungen eine niedrige Präzision bei der Fertigung eines Werkstückes fordern. Beispielsweise kann dann ein zweiter Nutzer in den ihm zugeordneten gerätespezifischen Anforderungen eine höhere Präzision bei der Fertigung eines Werkstückes fordern. Auf diese Weise können auch Sicherheitsanforderungen nutzerbezogen gespeichert werden. Es ist beispielsweise auch denkbar, dass bestimmten Typen oder Arten von Steuerbefehlen - nutzerbezogen oder nicht - gerätespezifische Anforderungen zugeordnet sind, die durch das Bestimmungsmodul berücksichtigt werden. Beispielsweise kann gefordert sein, dass ein Steuerbefehl zum Aufspielen einer Firmware nur durch ein Gerät erfolgt, das vorgegebene Sicherheitsanforderungen erfüllt, um z. B. sicherzustellen, dass nicht ohne weiteres Know-How der Firmware für jeden in einer Fertigungsanlage zugängig ist. Durch diese vorgegebenen Sicherheitsanforderungen kann beispielsweise gefordert sein, dass nur bestimmtes Personal einen Zugriff auf ein entsprechendes Gerät hat oder das Gerät durch ein Passwort und/oder anderen kryptographischen Mechanismen geschützt ist (z. B. Zugriff ist nur durch Einstecken einer Chipkarte und Eingeben einer Pin möglich).

Dies kann beispielsweise der Fall sein, wenn jemand an einem Gerät (z. B. einem Geldautomaten) sich Bargeld auszahlen lassen möchte. Die Steuerbefehle sind dann beispielsweise die Anforderung des Kunden eine Geldauszahlung vorzunehmen. Hat beispielsweise ein entsprechender Kunde konfiguriert (z. B. bei seiner Heimatbank oder beim Onlinebanking), dass er vorzugsweise nur in vorgegebenen Ländern, z. B. Italien, Frankreich und Österreich, eine Bargeldauszahlung erlaubt, so wird dies in den gerätespezifischen Anforderungen gespeichert, die vorzugsweise einem bestimmten Nutzer zugeordnet sind. Ein Geldautomat in Andorra würde dann ggf. keine Auszahlung erlauben bzw. diese unterbinden. Auch kann beispielsweise durch die Sicherheitsanforderungen eine vorgegebene Authentifizierung des Kunden gefordert sein. Beispielsweise, dass ein Pin für eine Auszahlung eingegeben wird (was z. B. in den USA nicht zwangsläufig der Fall ist) und/oder eine bestimmte Pin-Länge gefordert ist (z. B. 8 Zeichen) und/oder, dass andere zusätzliche Authentisierungsverfahren gefordert sind (z. B. 2 Faktor-Authentisierung, Mobile-Tan, Google Authenticator). Auf ähnliche Weise kann beispielsweise ein Aufladen einer Geldkarte realisiert sein, wobei z. B. die gerätespezifischen Anforderungen für die Geldkarte und das Gerät zum Aufladen Sicherheitsanforderungen vorgeben. Beispielsweise müssen die Geldkarte oder das Gerät zum Aufladen vorgegebene kryptographische Verfahren und/oder Authentifizierungsverfahren nutzen bzw. über die verfügen, um den Aufladevorgang durch zu führen.

Alternativ oder zusätzlich kann die (erste) Evaluierungseinheit die Steuerbefehle auch weiter analysieren oder umfangreicher analysieren. Wenn beispielsweise die Evaluierungseinheit bereits feststellt, dass die gerätespezifischen Anforderungen nicht erfüllt sind oder nicht erfüllbar sind (z. B. die Steuerbefehle wurden aus einem nicht freigegebenen Land geschickt oder sind für die Ausführung in einem nicht freigegebenen Land gedacht), kann z. B. die (erste) Evaluierungseinheit eine Steuertransaktion erstellen, die das entsprechende Gerät, Knoten oder das System auf die Nicht-Ausführbarkeit hinweist und vorzugsweise eine Ausführung der Steuerbefehle unterbindet bzw. verbietet. Alternativ kann beispielsweise auch keine Steuertransaktion erzeugt werden und es gibt irgendwann einen Timeout für die Ausführung der Steuerbefehle, z. B. nach einem vorgegebenen Zeitraum.

Um dies festzustellen, vergleicht die (erste) Evaluierungseinheit die gerätespezifischen Daten für das Gerät, das die Steuerbefehle ausführen soll, mit den gerätespezifischen Anforderungen z. B. für die Steuerbefehle. Abhängig vom Ergebnis dieses Vergleichens wird dann entweder eine Steuertransaktion erzeugt, die eine Ausführung der Steuerbefehle auf dem entsprechenden Gerät erlaubt, oder es wird keine Steuertransaktion erstellt oder es wird eine Steuertransaktion erstellt, die eine Ausführung der Steuerbefehle verbietet bzw. unterbindet.

Stellt die (erste) Evaluierungseinheit fest, dass die Steuerbefehle ausführbar sind (der Vergleich also positiv ist), erzeugt die (erste) Evaluierungseinheit entsprechende Ausführungsanforderungen und übermittelt die Steuerbefehle und die Ausführungsanforderungen beispielsweise an das erste Zuordnungsmodul zum Zuordnen der jeweiligen Ausführungsanforderungen zu den Steuerbefehlen. Das erste Zuordnungsmodul kann z. B. eine integrale Komponente des Bestimmungsmoduls sein oder eine integrale Komponente der Evaluierungseinheit.

Entsprechend kann somit insbesondere abhängig vom Ergebnis dieses Vergleichens dann entweder eine Steuertransaktion erzeugt werden, die eine Ausführung der Steuerbefehle auf dem entsprechenden Gerät erlaubt, oder es wird keine Steuertransaktion erstellt oder es wird eine Steuertransaktion erstellt, die eine Ausführung der Steuerbefehle verbietet bzw. unterbindet und/oder denjenigen der die Steuerbefehle bereitgestellt hat darüber informiert, dass die Steuerbefehle nicht ausführbar sind.

Danach werden die Steuerbefehle ggf. zusammen mit den zugehörigen Ausführungsanforderungen beispielsweise an ein erstes Speichermodul des Bestimmungsmoduls übermittelt. Diese Übermittlung kann beispielsweise durch das Zuordnungsmodul, die (erste) Evaluierungseinheit oder das Bestimmungsmodul selbst erfolgen.

Das erste Speichermodul ist zum Speichern der jeweiligen Steuerbefehle in Steuertransaktionen eingerichtet, wobei die Steuerbefehle beispielsweise zusammen mit den zugeordneten Ausführungsanforderungen in den Steuertransaktionen gespeichert werden, wenn die Steuerbefehle durch eines der Geräte (z. B. einem Geldautomat) Gerät ausführbar sind.

Mit anderen Worten wird abhängig vom Ergebnis des Vergleichens festlegt, ob eine Steuertransaktion gespeichert wird und/oder mit welchem Inhalt eine Steuertransaktion gespeichert wird.

Zum Speichern können die Steuertransaktionen dann in Datenblöcken (B) des verteilten Datenbanksystems (BC) gespeichert werden, wobei insbesondere die Steuertransaktionen mittels der Datenblöcke (B) an die Geräte (300, D, BCN_D) oder die Knoten übertragen werden - sofern eine Steuertransaktion erstellt wurde.

Zusätzlich kann das Bestimmungsmodul 110 beispielsweise noch ein erstes Zuordnungsmodul und/oder ein erstes Speichermodul und/oder weitere Module umfassen, so wie dies in den Ausführungsbeispielen erläutert wurde. Die Knoten oder Geräte können dann beispielsweise ein Überprüfungsmodul und/oder ein Ausführungsmodul umfassen, so wie dies in den Ausführungsbeispielen erläutert wurde.

Es wäre beispielsweise auch denkbar, dass Online-Banking auf die oben genannte Weise abgesichert wird, indem Sicherheitsanforderungen und/oder ortsbezogene Anforderungen des Rechners (also das Gerät, das Steuerbefehle verschickt) überprüft werden und, um festzustellen, ob die Auszahlung oder Überweisung durch ein anderes Gerät erlaubt ist. Hierzu kann beispielsweise dieser Rechner ein Knoten des verteilten Datenbanksystems sein oder ein Gerät - so wie dies bereits erläutert wurde.

Die Fig. 9 zeigt ein neuntes Ausführungsbeispiel der Erfindung als Ablaufdiagramm eines erfindungsgemäßen Verfahrens.

Das Verfahren ist vorzugsweise rechnergestützt realisiert.

Im Einzelnen wird in diesem Ausführungsbeispiel ein Verfahren zum rechnergestützten Bestimmen von Ausführungsanforderungen für Steuerbefehle realisiert. Das Verfahren kann beispielsweise auch verwendet werden, um die Ausführbarkeit von Steuerbefehlen zu ermitteln, so wie dies beispielsweise in Fig. 8 erläutert ist.

Das Verfahren umfasst einen ersten Verfahrensschritt 910 zum Empfangen oder Abrufen von Steuerbefehlen.

Das Verfahren umfasst einen zweiten Verfahrensschritt 920 zum Prüfen einer Ausführbarkeit der Steuerbefehle durch Knoten eines verteilten Datenbanksystems oder durch Geräte anhand gerätespezifischer Anforderungen und/oder vorausgesetzte Steuerbefehle. Bei dieser Prüfung werden zusätzlich beispielsweise die gerätespezifischen Daten und/oder die bereits ausgeführten Steuerbefehle bzw. Steuertransaktionen mit geprüft. Beispielsweise wird geprüft, ob ein Gerät die gerätespezifischen Anforderungen erfüllt, indem für das entsprechende Gerät die gerätespezifischen Daten überprüft werden.

Das Verfahren umfasst einen dritten Verfahrensschritt 930 zum Bestimmen von Ausführungsanforderungen abhängig vom Ergebnis des Prüfens der Ausführbarkeit für eine Ausführung von Steuerbefehlen durch Knoten eines verteilten Datenbanksystems oder durch Geräte.

Mit anderen Worten werden die Ausführungsanforderungen anhand von gerätespezifischen Anforderungen und/oder vorausgesetzte Steuerbefehle bestimmt.

Der zweite und der dritte Verfahrensschritt können beispielsweise durch die (erste) Evaluierungseinheit des Bestimmungsmoduls aus Fig.8 implementiert werden.

In den Ausführungsanforderungen sind dabei bzw. werden die gerätespezifische Anforderungen und/oder die vorausgesetzten Steuerbefehle gespeichert. Das verteilte Datenbanksysten ist dabei beispielsweise eine Blockkette.

Die Knoten oder die Geräte sind dabei z. B. mittels des verteilten Datenbanksystems verbunden.

Zum Bestimmen der Ausführungsanforderungen werden z. B. die gerätespezifischen Anforderungen oder vorausgesetzten Steuerbefehle analysiert und mit den bereits ausgeführten Steuerbefehlen und gerätespezifischen Anforderungen für verfügbare Geräte verglichen. Beispielsweise kann in diesem Schritt auch eine spezifische Zuweisung bzw. Zuordnung eines spezifischen Knotens oder eines spezifischen Gerätes erfolgen, das die Steuerbefehle ausführen soll. Damit werden insbesondere die Zuverlässigkeit und die Sicherheit der Ausführung verbessert bzw. sichergestellt, dass die Ausführung z. B. das gewünschte Resultat erzeugt. Dies ist z. B., dass ein Produkt mit der erforderlichen Präzision gefertigt wurde.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles https://blockchainhub.net/blockchain-oracles/ Stand 14.03.2018

## Patentansprüche

1. Erstes verteiltes Datenbanksystem zum Speichern und/oder Bereitstellen von Transaktionen aufweisend:
- eine Vielzahl von Knoten (BCN), die über ein Kommunikationsnetzwerk (NW2) miteinander verbunden sind;
- ein erstes Speichermodul zum Speichern von Transaktionen in dem verteilten Datenbanksystem; **gekennzeichnet durch**
- ein zweites Speichermodul zum Speichern eines Aufgabendatensatzes einer spezifischen Aufgabe, wobei
- dem verteilten Datenbanksystem der Aufgabendatensatz zugeordnet ist oder wird;
- ein erstes Zuordnungsmodul zum Zuordnen eines Gültigkeitsdatensatzes für das verteilte Datenbanksystem.

2. Erstes verteiltes Datenbanksystem nach Anspruch 1, wobei
- der Gültigkeitsdatensatz einen Zeitraum und/oder einen Zeitpunkt und/oder ein Ereignis angibt, bis zu dem eine der Funktion oder alle Funktionen ausgeführt werden können,
- insbesondere das Ereignis das Erfüllen der spezifischen Aufgabe ist, und/oder
- insbesondere der Zeitraum eine Lebensdauer eines Gerätes oder Feldgerätes ist, und/oder
- insbesondere der Zeitraum eine Durchführungszeit einer Befehlsfolge und/oder einer Wartungsaktion und/oder einer Steuerungsaktion eines Gerätes oder Feldgerätes ist,
- insbesondere zu dem Zeitpunkt ein Gerät oder Feldgerät ausgetauscht wird.

3. Erstes verteiltes Datenbanksystem nach Anspruch 1 oder 2, wobei der Gültigkeitsdatensatz durch den Aufgabendatensatz der spezifischen Aufgabe festgelegt ist.

4. Erstes verteiltes Datenbanksystem nach einem der Ansprüche 1-3, wobei das erste verteilte Datenbanksystem ein Überprüfungsmodul umfasst, das die Gültigkeit für vorgegebene Funktionen überprüft.

5. Erstes verteiltes Datenbanksystem nach einem der Ansprüche 1-4, wobei die Transaktionen Steuerbefehle und/oder Befehlsfolgen und/oder gerätespezifische Daten über ein Gerät oder ein Feldgerät umfassen.

6. Verfahren zum rechnergestützten Speichern und/oder Bereitstellen von Transaktionen mit folgenden Verfahrensschritten:
- Speichern (710) von Daten in Transaktionen, wobei die Transaktionen in einem ersten verteilten Datenbanksystem gespeichert sind und/oder werden; **gekennzeichnet durch** die Schritte:
- Speichern eines Aufgabendatensatzes einer spezifischen Aufgabe, wobei
- dem verteilten Datenbanksystem der Aufgabendatensatz zugeordnet ist und/oder wird;
- Zuordnen (730) eines Gültigkeitsdatensatzes für das verteilte Datenbanksystem.

7. Computerprogrammprodukt mit Programmbefehlen zur Durchführung des Verfahrens nach Anspruch 6.

8. Bereitstellungsvorrichtung für das Computerprogrammprodukt nach Anspruch 7, wobei die Bereitstellungsvorrichtung das Computerprogrammprodukt speichert und/oder bereitstellt.

## Claims

1. First distributed database system for storing and/or providing transactions, having:
- a multiplicity of nodes (BCN) connected to one another via a communication network (NW2);
- a first memory module for storing transactions in the distributed database system; **characterized by**
- a second memory module for storing a task data record of a specific task, wherein
- the task data record is assigned to the distributed database system;
- a first assigning module for assigning a validity data record for the distributed database system.

2. First distributed database system according to Claim 1, wherein
- the validity data record indicates a period and/or a time and/or an event up to which one of the functions or all functions can be carried out,
- in particular the event is the accomplishment of the specific task, and/or
- in particular the period is a life of a device or field device, and/or
- in particular the period is a performance time for an instruction sequence and/or a maintenance action and/or a control action of a device or field device,
- in particular a device or field device is replaced at the time.

3. First distributed database system according to Claim 1 or 2, wherein the validity data record is stipulated by the task data record of the specific task.

4. First distributed database system according to one of Claims 1-3, wherein the first distributed database system comprises a checking module that checks the validity for prescribed functions.

5. First distributed database system according to one of Claims 1-4, wherein the transactions comprise control instructions and/or instruction sequences and/or device-specific data about a device or a field device.

6. Method for the computer-aided storage and/or provision of transactions, having the following method steps:
- storing (710) data in transactions, wherein the transactions are stored in a first distributed database system; **characterized by** the steps of:
- storing a task data record of a specific task, wherein
- the task data record is assigned to the distributed database system;
- assigning (730) a validity data record for the distributed database system.

7. Computer program product having program instructions for performing the method according to Claim 6.

8. Providing apparatus for the computer program product according to Claim 7, wherein the providing apparatus stores and/or provides the computer program product.

## Revendications

1. Premier système de bases de données distribué destiné à la sauvegarde et/ou à la mise à disposition de transactions présentant :
- une pluralité de nœuds (BCN) qui sont reliés les uns aux autres par l'intermédiaire d'un réseau de communication (NW2) ;
- un premier module de sauvegarde destiné à la sauvegarde de transactions dans le système de bases de données distribué ; **caractérisé par**
- un second module de sauvegarde destiné à la sauvegarde d'un jeu de données de tâche d'une tâche spécifique, dans lequel
- le jeu de données de tâche est ou sera associé au système de bases de données distribué ;
- un premier module d'association destiné à l'association d'un jeu de données de validité pour le système de bases de données distribué.

2. Premier système de bases de données distribué selon la revendication 1, dans lequel
- le jeu de données de validité indique une période de temps et/ou un moment et/ou un événement jusqu'auquel une de la fonction ou toutes les fonctions puissent être réalisées,
- en particulier l'événement est l'accomplissement de la tâche spécifique, et/ou
- en particulier la période de temps est une durée de vie d'un appareil ou d'un appareil de terrain, et/ou
- en particulier la période de temps est un temps de réalisation d'une suite d'instructions et/ou d'une action de maintenance et/ou d'une action de commande d'un appareil ou d'un appareil de terrain,
- en particulier au moment où un appareil ou un appareil de terrain est échangé.

3. Premier système de bases de données distribué selon la revendication 1 ou 2, dans lequel le jeu de données de validité est défini par le biais du jeu de données de tâche de la tâche spécifique.

4. Premier système de bases de données distribué selon l'une quelconque des revendications 1 à 3, dans lequel le premier système de bases de données distribué comprend un module de vérification qui vérifie la validité pour des fonctions prédéfinies.

5. Premier système de bases de données distribué selon l'une quelconque des revendications 1 à 4, dans lequel les transactions comprennent des instructions de commande et/ou des suites d'instructions et/ou des données spécifiques à l'appareil au sujet d'un appareil ou d'un appareil de terrain.

6. Procédé destiné à la sauvegarde informatisée et/ou à la mise à disposition de transactions avec les étapes de procédé suivantes :
- sauvegarde (710) de données dans des transactions, dans lequel les transactions sont et/ou seront sauvegardées dans un premier système de bases de données distribué ; **caractérisé par** les étapes :
- de sauvegarde d'un jeu de données de tâche d'une tâche spécifique, dans lequel
- le jeu de données de tâche est et/ou sera associé au système de bases de données distribué ;
- d'association (730) d'un jeu de données de validité pour le système de bases de données distribué.

7. Produit de programme informatique avec des instructions de programme destinées à la réalisation du procédé selon la revendication 6.

8. Dispositif de mise à disposition pour le produit de programme informatique selon la revendication 7, dans lequel le dispositif de mise à disposition sauvegarde et/ou met à disposition le produit de programme informatique.
